Europäisches Patentamt

European Patent Office

Office européen des brevets

(19)

(11) **EP 1 548 740 A2**

## (12) EUROPEAN PATENT APPLICATION

(43) Date of publication:
**29.06.2005 Bulletin 2005/26**

(51) Int Cl.7: **G11B 27/00**, G11B 27/34

(21) Application number: **04258106.6**

(22) Date of filing: **23.12.2004**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **24.12.2003 US 746301
06.01.2004 US 752391
08.06.2004 US 862954**

(71) Applicant: **Bose Corporation
Framlingham, Massachusetts 01701-9168 (US)**

(72) Inventors:
• **Martin, Keith D.
Massachusetts 01701-9168 (US)**
• **Zamir, Lee
Massachusetts 01701-9168 (US)**
• **Reiman, Robert
Massachusetts 01701-9168 (US)**

(74) Representative: **Brunner, Michael John
GILL JENNINGS & EVERY,
Broadgate House,
7 Eldon Street
London EC2M 7LH (GB)**

## (54) Intelligent music track selection

(57)    A method is described comprising
based on user preference information about digital works, selecting available digital works to be included in at least two different sequences of digital works to be performed, the different sequences being based on different aspects of the preference information, and
enabling the different sequences to be performed at the same time by a performance system.

FIG. 1

**Description**

This is a continuation-in-part of United States patent application serial number 10/752,391, filed 1/6/2004, and a continuation-in-part of United States patent application serial number 10/746,301, filed December 24, 2003, the latter of which is a continuation-in-part of United States patent application serial number 10/180,900, filed June 25, 2002, titled Selection of Items Based on User Reactions. All of the applications named above are incorporated here in their entirety.

This description relates to selection of items based on user reactions.

For items that are tracks of music on a compact disc, for example, some CD players enable a user to indicate his preference by programming a sequence in which the tracks are to be played. When one track ends, the CD player selects the next track based on the programmed sequence.

Some music playing devices and software allow a user to indicate a preference for a type of music, jazz for example, and the device or software will play items of music of the selected type.

In one proposed system, a selection is made of a next track to be played based on rating information provided by a user. One system provides a thumbs up/thumbs down interface for a user to indicate his preferences. Another system selects music items to be played based on preferences indicated by a listening audience on a thumbs up/ thumbs down interface. Some systems offer an automatic play list feature in which music items are selected for play based on user answers to questions that indicate preferences for types of music. At least one online merchant infers a user's tastes based on music purchased by the user.

In other cases, the items to be selected are features of a software application or files used by the software application. The user expresses his preference by using the features or the files. In Microsoft Word, for example, recently used files are selected by the application for display in a recently used files list on a drop down menu, and only recently used features (for example, an outlining feature) are selected for display on drop down menus for possible invocation by a user.

SUMMARY

In general, in one aspect, the invention features a method that includes, based on user preference information about digital works, selecting available digital works to be included in at least two different sequences of digital works to be performed, the different sequences being based on different aspects of the preference information, and enabling the different sequences to be performed at the same time by a performance system.

Implementations may include one or more of the following features. The selecting is performed by multiple instances of a work selection process. The digital works of the different sequences are delivered for performance from a single mass storage device. The different aspects of the preference information are associated with different users or groups of users. The selecting for different sequences is done by different instances of a digital work selection process. The different instances do the selecting using a common network of nodes of information about the digital works.

In general, in another aspect, the invention features a method that includes receiving incoming preference information that is being provided about digital works being performed, and while the incoming preference information is being provided, selecting the digital works to be performed based on a body of preference information in a manner that is not affected by the incoming preference information.

Implementations may include one or more of the following features. The incoming preference information is from one user or group of users and the digital works to be performed to that user or group of users are selected based on preference information provided by a different user or group of users.

In general, in another aspect, the invention features a method that includes receiving preference information provided from two different sources about digital works being performed with respect to the two different sources, and using the received preference information from both of the sources to select digital works to be performed.

Implementations may include one or more of the following features. The preference information is provided from the two different sources by a single user at two different times. The preference information is provided from the two different sources by two different users.

In general, in another aspect, the invention features a method that includes receiving preference information from a user about digital works that are being performed for the user and are not in a collection of the digital works that belong to the user, and storing the preference information to be used to select digital works to be performed for the user, from the collection of digital works that belong to the user.

Implementations may include one or more of the following features. The works that are being performed for the user belong to a second collection. The digital works are selected using the preference information, the selecting including generating a first network of nodes using first stored preference information associated with works that have been performed for the user, generating a second network of nodes using second stored preference information associated with works in the collection, propagating the first stored preference information through the second network. Only values of the ancestors of the track that are actually present in the second collection are updated. For works that have been performed but are not in the collection, there is applied to the second network, first preference information for works that are related to works in the collection but are not themselves in the collection.

In general, in another aspect, the invention features a method that includes enabling a user of a first remote control device to formulate a first structured query of a database of digital works available at a music system that interacts with the remote control device, and sending the structured query to the music system.

Implementations may include one or more of the following features. The method also includes enabling a user of a second remote control device to formulate a second structured query of the database while the first structured query is being formulated. The first structured query and the second structured query are provided independently and actions are taken in response to the respective queries independently.

In general, in another aspect, the invention features a method that includes enabling a user of a remote control device to explicitly indicate first preferences with respect to digital works being performed by a music system, and using the preference indications in selecting a first future sequence of digital works to be performed. A user of a remote control device is enabled to explicitly indicate second preferences with respect to digital works being performed by the music system, and the other preference indications are used in selecting a second future sequence of digital works to be performed.

Implementations may include one or more of the following features. The first preferences and the second preferences are indicated by a single user. The first preferences and the second preferences are indicated by a single user on two different remote control devices. The first preferences and the second preferences are indicated by two different users on two different remote control devices. The first future sequence and the second future sequence are performed for two different users.

In general, in another aspect, the invention features a method that includes enabling a user to define one or more values to be used in querying a database of information about digital works, the values to be used to identify a subset of the database, performing an action with respect to the subset, and generating a list of some of the digital works to be performed based on preference information about the works, the digital works on the performance list belonging to the subset.

In general, in another aspect, the invention features a method that includes enabling a user to define one or more values to be used in querying a database of information about digital works, the values to be used to identify a subset of the database, and associating a user-specified preference with digital works in the subset.

Implementations may include one or more of the following features. The method also includes enabling the user to indicate the action that is performed with respect to the subset. The enabling comprises displaying for the user at least one identifier of a field of the database. The enabling comprises permitting the user to identify a value of the field. The enabling comprises permitting the user to indicate a default representing any value of the field. The field of the database comprises at least one of genre, artist, album, producer, composer, ensemble, conductor, featured performer, and year. The user is enabled to select the values from a list that is arranged from more general to less general. The less general criteria may have values associated with more than one possible value for of an item that lies at a more general level.

In general, in another aspect, the invention features a method that includes displaying to a user identifiers of categories of digital works that may be performed for a user, each of the categories including a set of the digital works, at least a broader one of the categories including digital works that belong respectively to more than one of the narrower categories, at least a narrower one of the categories including digital works that belong respectively to more than one of the broader categories, enabling a user to select a value for the identifier of one of the broader categories, and enabling the user to select a value of the identifier of one of the narrower categories, the value being constrained based on the selected value of the broader category.

Implementations may include one or more of the following features. The categories include at least two of genre, artist, album, producer, composer, ensemble, conductor, featured performer, and year. The user is enabled to navigate among categories using a manual control and to navigate among possible values with respect to a given identifier using a separate manual control. The stored information is queried about the digital works using the broader category value and the narrower category value selected by the user. The user is enabled to navigate among possible values with respect to a first identifier of a broader category, and the display of values available for selection with respect to a second identifier of a narrower category is updated to include only values that, are permitted by the broader category value to which the user has navigated.

In general, in another aspect, the invention features a method that includes with respect to at least two digital works that are available at two separately addressable locations, in one operating mode of a device that performs the works, automatically preventing the performing of one of the works without also performing another of the works.

Implementations may include one or more of the following features. The two digital works are sequential. A request is received from a user to have at least one of the works performed. The request of the user comprises a request to play a group that has been defined to include the two digital audio works. The works are stored at two separately addressable locations on a storage medium. The medium comprises a CD. The one operating mode comprises automatically selecting works for performance based on user preferences. In another operating mode, each of the one work and the other work may be performed individually upon request by a user.

In general, in another aspect, the invention features a method that includes associating at least two digital works that are at separately addressable locations in a manner that identifies them as works that are to be performed together, the digital works including fewer than all of the digital works stored on a given storage medium.

Implementations may include one or more of the following features. The associating is based on metadata describing the digital works. The associating is based on information provided by a user. The information provided by the user identifies two or more digital works stored on a single medium that are to be associated. The information provided by the user indicates at least one of: associating none of the works stored on a single medium, associating all of the works stored on the single medium, or automatically associating at least some of the works stored on a single medium. Even when the user indicates automatically associating at least some of the works, no association is done.

In general, in another aspect, the invention features a method that includes in a user interface for controlling a device that performs digital works, enabling a user to identify at least two works to be associated in a manner that causes them to be performed together.

Implementations may include one or more of the following features. The user is enabled to identify at least two works that are stored on a single medium. The user is enabled to identify works that are stored on a single medium in at least one of the following ways: associating none of the works stored on a single medium, associating all of the works stored on the single medium, or automatically associating at least some of the works stored on a single medium. Even when the user indicates automatically associating at least some of the works, no association is done.

In general, in another aspect, the invention features a method that includes using metadata about digital works to automatically associate at least two digital works in a particular order, and when a preference-based selection process selects one of the works to be included in a sequence of works to be performed, the process always selects the other of the two works to be included next in the sequence.

Implementations may include one or more of the following features. When the selection process selects one of the works, all of the works that are automatically associated by the metadata are included in the sequence for performance in an order specified by the metadata.

In general, in another aspect, the invention features a method that includes for each work of a set of digital works, storing information identifying the work and preference data that indicates a preference of one or more users for performance of the work, the information and preference data being stored on a portable storage medium.

Implementations may include one or more of the following features. The identifying information comprises an album number, a medium number, and a track number for a compact disc. The album number may comprise a unique album identifier. The preference data comprises a score. The preference data comprises a value representing a confidence level for the preference data. The information and data for each of the works comprises no more than bits per work.

In general, in another aspect, the invention features a medium bearing information to enable a device to select a series of digital works to be performed based on preferences for performance of the works, the information that includes information identifying the work and preference data that indicates a preference of one or more users for performance of the work. The medium may be a portable storage medium.

In general, in another aspect, the invention features a method that includes enabling searching of a database of information about digital audio works to be performed by selecting a set of values for categories to which the digital works belong, the categories including an identifier of an ensemble associated with the work, taking an action with respect to results of the searching, and selecting a sequence of works to be performed in part based on the action.

Implementations may include one or more of the following features. The categories include identifiers of a composer, and performance.

In general, in another aspect, the invention features a method that includes enabling a user to search a database of information about digital audio works to be performed by selecting a set of values for categories to which the digital works belong, the categories including at least one broader category and at least one narrower category, the identity of the narrower category from which values may be selected depending on the identity of the broader category from which values may be selected, the broader category that includes classical music and the narrower category that includes ensemble.

In general, in another aspect, the invention features a method that includes selecting a set of digital works to be performed, the list being based on a probabilistic application of user preferences, the set being selected from a larger library of works, and storing the list of digital works on a portable medium.

Implementations may include one or more of the following features. The works may be stored on the medium in an order determined by the selecting. Preference data associated with the user preferences may be stored on the medium. The digital works on the medium may be stored in an arbitrary order. The digital works may be stored on the medium in folders each including a selected set of digital works to be performed. The works are stored in each folder in an order determined by the selecting. The respective folders are identified within an order of relative preference based on the user preferences. Preference data may be stored associated with the user preferences and the digital works on the medium, and the stored preference data may be used to control the order of playback of the works stored on the medium. The portable medium is portable independently of any device used to select or perform the digital works.

In general, in another aspect, the invention features a method that includes using information provided by a third party about a digital work to be performed in maintaining stored preference information about digital works that may be selected probabilistically for inclusion in a sequence of digital works to be performed for a user.

Implementations may include one or more of the following features. The third party comprises a critic. The information provided by the third party includes an indication of at least one of the tracks of a CD that is considered to be preferably to other tracks of the CD. The probability of selection of a digital work is increased based on the information provided by the third party.

Other aspects of the invention include other methods, apparatus that performs the methods, systems that contain the apparatus, and combinations of means for performing the methods.

Other advantages and feature will become apparent from the following description and from the claims.

DESCRIPTION

Figures 1, 2, and 3 are block diagrams of platforms.
Figures 4, 5, and 6 are state diagrams.
Figure 7 is a block diagram.
Figure 8 shows a node.
Figures 9 shows a display.
Figures 10, 11, and 12 show database schemas.
Figure 13 shows a user interface.
Figure 14 shows a history of tracks.
Figure 15 shows a database structure.
Figure 16 shows a state diagram.
Figure 17 shows a flow chart.
Figure 18 shows a remote controller.
Figure 19 shows a display.
Figures 20 and 21 are state diagrams.
Figure 22 shows a hierarchy.
Figures 23 and 24 show user interfaces.
Figure 25 shows a user interface.
Figures 26, 27, and 28 show displays.
Figure 29 shows a graph.
Figure 30 shows a hierarchy.
Figure 31 shows a graph.
Figure 32 shows a user interface.
Figure 33 shows a block diagram.
Figure 34 shows a hierarchy.
Figure 35 shows a block diagram of a system.
Figure 36 is a block diagram of a music system.
Figure 37 is a block diagram.
Figures 38A, 38B, and 38C show a database navigation screen.

Overview

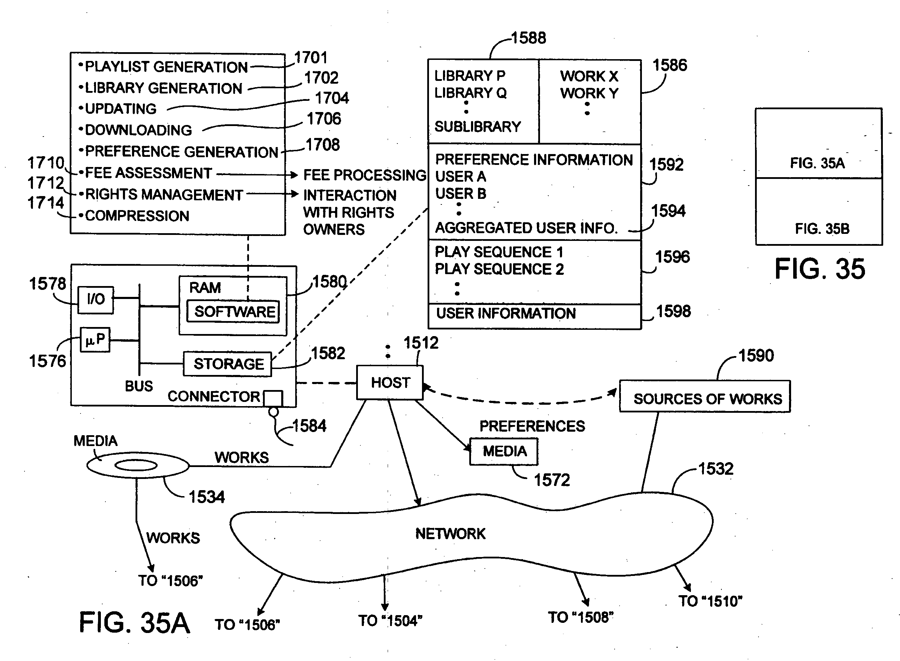

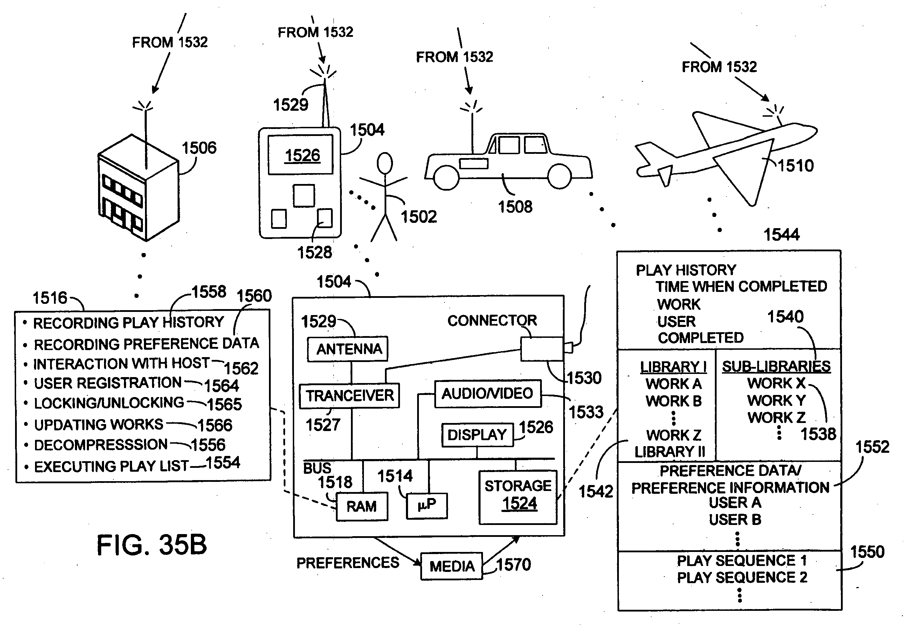

As shown in figure 35, in a system 1500, users 1502 may have multimedia works performed for them by local electronic devices 1504, 1506, 1508, 1510 that are typically portable or mobile (or in some cases may be not mobile). Only a few are shown but there may be thousands or even millions of such devices operating in the system. By one or more of a variety of techniques, one or more of the users may indicate at the local devices 1504 their preferences about particular multimedia works or kinds of multimedia works, for example, that they like Beatles' albums. Their indications of preferences may be accumulated as preference data at each of the devices. The accumulated preference data may be used by other devices (for example, other local devices or one or more host electronic devices 1512) to generate, update, and store preference information, in some cases associating that information specifically with respective users. Based on the stored preference information, the host or other device may generate one or more play lists (which are one kind of play sequence) for use on the local devices to govern the playing of multimedia works. One or more of the hosts may also manage the downloading of multimedia works to the local devices in accordance with the play lists and/or the preference information.

As a result, the users may enjoy a significantly enhanced experience, which is more consistent with their preferences, with respect to the multimedia works. A variety of other features described later may also be used with the system of figure 1500.

At least some of the devices 1504, 1506, 1508, 1510 (for example, a small hand-held device) may not have enough processing capability to run software that will provide all of the capabilities of a multimedia preference system. In those cases, the local device with limited capability may perform only a few of the functions of the preference system, while others are performed centrally at a host. For example, the local device may capture certain information, such as the preference data in raw form, while another device uses the data to derive other information (such as preference information) that will determine which works will be performed (either by creating and downloading play sequences to the local device and/or by updating libraries to be downloaded for use on the local device). In other examples, the local device has adequate processing capabilities and coordinates with the host or other devices so that preference information is transported to whichever device a particular user may be using (or for updating libraries if the device has insufficient storage resources).

In the phrase "multimedia works", when used alone, we include audio works (notably music), video works (notably movies), images, sounds, and works (other than simple characters or text) that may be experienced by human senses, especially by sight or hearing. In other places, when used with words such as audio and video, the phrase multimedia works may mean works that are not simply an audio work or a video work.

In the phrase "local devices", we include music players including MP3 players, mobile telephones, personal digital assistants, radio, video, CD, and other kinds of multimedia players in vehicles, boats, and aircraft, home-based music, video and other multimedia systems, and generally any sort of multimedia player that serves one or a small number of individual users.

In the word or phrase "preference data" or "preference information", we include any indication that a user favors or disfavors an individual multimedia work or a class of multimedia works. For example, preference data could be as simple as a users choice to terminate the performance of a work before it is over. But preference data could be complex and detailed. Preference information can be derived from and more abstract than preference data. For example, if a user repeatedly stops performance of rock music works, the raw data would capture the individual events, while preference information derived from the raw preference data could be that the user dislikes rock music.

Referring again to figure 35, the handheld device 1504 could, in one example, be an Apple IPOD or any of a wide variety of so-called MP3 players, that can store and play audio works encoded in MP3 format under the control of the user.

The device 1504 contains a microprocessor 1514 to execute software 1516 contained in a RAM 1518 (or in firmware). Information about the works that are playing or may be played and other information associated with use of the device is stored in RAM 1518 or on a larger volume storage device 1524 and may be shown to the user on a display 1526. The storage device can be a disk drive, or flash memory, or other forms of storage. The user controls the operation of the player using one or more controls 1528. The controls can be mechanical buttons or switches or can be touch controls accessible on the display, or can be implemented by voice control or other kinds of nonmechanical control of the device. The storage device 1524 can be of the kind that is removable from the device and reusable, such as a removable disk drive or memory card, or may be unremovable.

The device 1504 also may include a transceiver 1527 and an associated antenna 1529 that permit multimedia works, preference data and preference information, and other information to be passed wirelessly into or out of the device to and from other devices including other local devices or one or more hosts. A connector 1530 may be provided to enable similar transfers on wired connections. Whether wireless or wired transfers or both are enabled the communications can occur on dedicated channels or on one or more private or public networks 1532. The local device in some versions could include hardware 1533 capable of audio and video performances, for example, a DVD player.

The storage 1524 may store a variety of kinds of information. Multimedia works may be stored individually 1538, in sub-libraries 1540, or in libraries 1542. The stored works may be received on a removable medium, or may be downloaded wirelessly or through a wired connection. The stored works may be updated by adding additional works and removing stored works, and the updating may be based at least in part on the expressed or implied preferences of the user as captured in preference data or preference information.

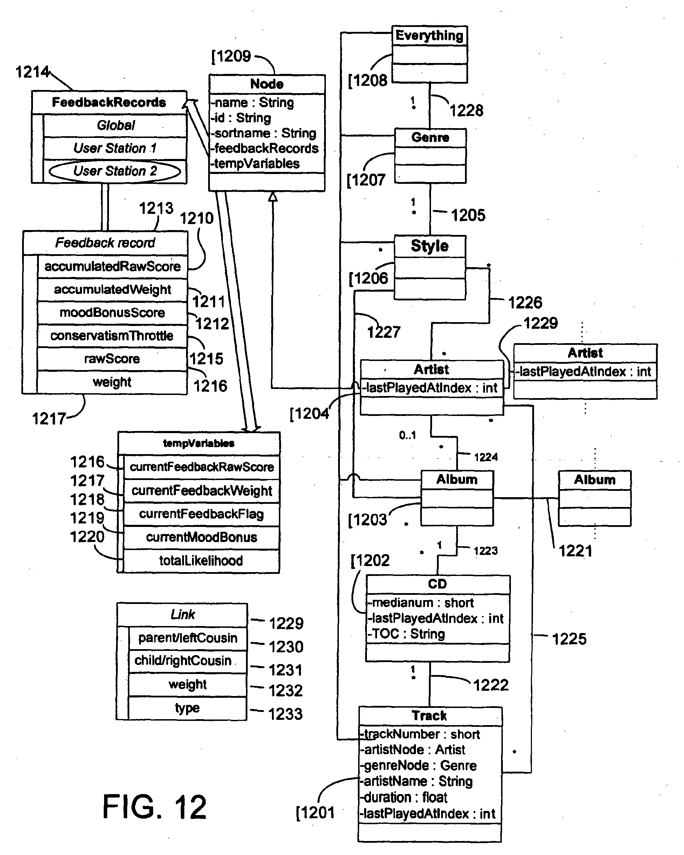

Thus, where multimedia works that are stored on the local device have lower relative preference scores than other multimedia works available at the host, a swapping out process can be implemented that swaps the low preference works for higher preference ones. The swapping increases the chances of pleasing the user notwithstanding the limited storage of the local device. One way to control the swapping is to remove the works with the lowest ratings (up to some threshold, or to some percentage of storage space), and to replace them from the larger library with the works that have the highest ratings. Ratings may be predicted by inserting metadata for unrated works into the metadata network (an example of a metadata network is described in more detail below with respect to figure 12) and using a score calculation engine to determine the predicted score based on the information that's been gathered for other works. This process uses overlap between the metadata of the un-rated works and the rated works to predict the rating for the un-rated works.

Play histories 1544 may also be stored, including identifiers of works that are played, whether the play was completed, and the time when the play was completed. If the device maintains separate information for different identified users of the device, the play history may also indicate the identifier of the user 1502 who played the work. The Apple IPOD, for example, is configured to store the number of times a given work is played, the time when it was last played, and a rating (1-5 stars) for each work as entered by a user.

The storage may also contain predetermined play sequences 1550 each of which identifies a sequence of works to be performed. The play sequences may be entered by the user, or may be provided from the host or another local device. If the local device on which the works are performed has sufficient processing capability, the play sequence may be provided at the local device itself. In some cases, the play sequences are determined based on the available works on the local device together with historical preference data entered by the user or preference information associated with the user or both. The play sequences may include play lists that are simple lists of works to be played, one after the other, or more complicated lists of items that control what is played but not necessarily in a simple order.

The storage may also contain raw preference data 1552 associated with one or more users or preference information that is derived, from the raw data as mentioned earlier. The preference data may include ratings of each of the works that is performed or available for performance on the device (e.g., the star system of the IPOD) or may include other kinds of indications of positive or negative preference for individual works or groups of works.

For example, the user may stop the performance of a work in the middle from which the system may infer that the user had a negative preference for that work (and possibly for works like it). The list of works played can be compared to the history of completed works to determine which works were played but not completed. Conversely, if the user allows a work to play completely, an inference could be drawn that the user has a positive preference for the work (and possibly for works like it).

The RAM or other program storage in the local device could include programs that perform a variety of functions including fetching and executing play sequences 1554, decompressing compressed audio data 1556, recording play histories 1558, recording preference data 1560 (and in some cases deriving preference information from the preference data), interacting with the host and other local devices 1562, registration and logging of different users 1564, locking and unlocking works to be performed 1565, and updating the libraries, sub-libraries, and individual works 1566.

In addition to receiving and storing works, the local device has the capability of exporting and importing preference data and preference information for a given user or users on media 1570 (or electronically over a communication channel). In this way, a user can carry his preference information with him (or send it electronically) for use with more than one of the local devices. For example, a user could carry his preference information onto an airplane 1510 or into a car 1508 or into a hotel room 1506 and have it used to control the play sequence of a local device in any of those locations. Preference data and preference information may also be downloaded or distributed on media 1572 from a host. The preference data need not be stored or created on the same device on which the multimedia works are being performed but could be stored or created on a separate device.

Works that are to be added to works stored in the local device can be downloaded electronically, e.g., through the network 1532 (through either a wired or wireless connection), or distributed on media 1534. The downloading can be done by a background process so that the user is not aware that the downloading is occurring.

The host 1512 can be a workstation or server or other electronic device and would typically include a microprocessor 1576, I/O devices 1578, RAM 1580, and storage 1582. The host can have a connector 1584 to download or export works or preference information.

The storage of the host may contain extremely large numbers of individual works 1586, and of sub-libraries and libraries 1588 of individual works. The works can be received from a wide variety of sources 1590, such as CDs, DVDs, or other available transportable media, radio, or television stations, or other sources that may be available through the network connection of the host, such as Internet web sites that provide downloadable media content. The storage may also contain preference information 1592 for each user and aggregated user information 1594 that may be useful for more than one user or for groups of users. Play sequences 1596 (including play lists) generated by the host are also stored for downloading or distribution to local devices. A registry of user information 1598 contains registration and other information that enables the system to uniquely identify and interact with each user.

The software that is executed on the host may include play list generation software to generate play sequences, including play lists, from preference information and lists of available works. Library generation software 1702 manages the receipt and creation of libraries and sub libraries of works from which works can be downloaded or distributed to local devices. Updating software 1704 manages the updating process. Downloading software 1706 manages the downloading or distribution process. Preference generation software 1708 (which is described in more detail later) uses preference data from one of more users to infer and develop preference information for storage and use in producing play lists. Fee assessment software 1710 manages the process of charging users for works played on the local devices. Rights management software 17-12-conversely manages the process of compensating rights owners for use of works. Compression software 1714 manages the compression of works for distribution and downloading.

The design choice of whether the processing that converts the preference data to preference information is performed entirely on the host or entirely on the local device or in some combination of the two depends at least in part on the relative capabilities of the two devices.

The preference data entered in a local device (e.g., a portable music player) could also be used in connection with making recommendations for works to be purchased by a user. (Additional information about purchase recommendations is set forth later.) Purchase recommendations may be for entire CDs, DVDs, or other compilations of works, or could be for individual tracks. The preference data from the local device, once it has been converted into preference information, can be used in generating the purchase recommendations. In one example, preference data accumulated in a hand-held music player such as an Apple IPOD (or preference information derived from the data) may be uploaded to a music retailing website such as Apple's iTunes. At the website, the preference data may be converted to preference information. The converted or uploaded preference information may be used to control a feature that makes suggestions, to a user of the music retailing site, of compilations or individual works (tracks) that the user may wish to purchase for downloading to his music player. In another example, preference data is converted to preference information before transfer to a music retailing website. Conversion from preferences data to preference information may occur on the local device or the host, or may be performed partly on the local device and partly on the host.

In addition, the retailing website could provide automated downloads to a user's local device (directly or indirectly through another server or through a personal computer to which the user has access) of preview portions of works that are determined to be of interest to the user. Such previews may be made part of play sequences also downloaded to the local device. When the local device (e.g., player) plays one of the portions, the performance could be followed by an audible or displayed message along the lines of "The complete track is available for purchase from iTunes. Please press the enter button if you would like to purchase the track." The player could record the purchase request, and either forward it immediately to the retailing website if the player is connected to the website (or otherwise to a network capable of connecting to the website), or could save the request in memory for fulfillment at a later time when the player is next connected to the network or website.

The interaction with the retailing website could be through the host shown in figure 35 and through a computer to the user's local device. In that example, and also in . other implementations of the local devices in figure 35, the computer could serve as an intermediary between the host and the local device acting as a proxy for the local device by storing downloaded works, play sequences, and preference information and then forwarding them to the local device at a convenient time and place. Preference data and preference information that is to be uploaded to the host could also be stored temporarily on the computer. The host could be configured to interact with the retailing website by providing preference information for a user to the website automatically or as requested or authorized by the user. The host could also serve as an intermediary on behalf of the user for buying works to be downloaded to the local devices.

In other examples, the interaction (including downloading of purchased works) between the retailing site or host and the local device could occur directly when the local device and the retailing site or host are in communication through a network. In some examples, the purchase request may be saved on the local device and uploaded later to the host for processing and fulfillment.

In the case of systems in which the local device has been rented or is being used temporarily or is owned by a party other than the user, the actual works performed, and the compilations to which those works belong would also be included in the suggestions for purchase.

Many details of the implementation of the host and the local devices and the manner of deriving preference information from user input and of generating play lists is contained in a description that appears later (and was taken from United States Patent Application Serial Number 10/180,900, filed June 25, 2002, which application is incorporated here in its entirety by reference; much of the application is set forth below.).

Among the many examples of how the system 1500 may be used to improve the experiences of users of the local devices are the following.

A user of a local device may trigger the playing of a sequence of songs. The play sequence is predefined and stored on the device. For each song, the user may allow the song to play through to the end (in which case, that fact and the time of completion is stored) or may stop the song before it is done and proceed to the next song. In that case, nothing is recorded in the play history (at least in the IPOD example). The local device or the host may infer from the user's decision not to finish playing the song, that the user does not like the song. The play sequence may then be modified, or subsequent play sequences may be configured to provide the user with songs that he is more likely to enjoy. In some cases, the only information about the user's preferences may be the negative information inferred from failure to completely play the songs. In other cases, the user may provide positive and negative explicit feedback, e. g., by a rating system.

In some cases, a given user may indicate his preferences through more than one of the local devices, for example, a portable MP3 player, a home audio system, and a rental car. By aggregating the preference data, analyzing it, and deriving preference information from it, the system is able to control play lists more effectively on each of the local devices for that user. Not only may the play lists be improved but the selection of which works to download or distribute, either initially or in an update, to each of the local devices may be improved. The complement of works stored on a given local device may be limited by storage space and the downloaded or distributed works may therefore be only a subset of libraries that are stored on the host.

When the system is arranged to charge a fee to the user for works performed, the fees can be assessed per work or per use or based on a one-time charge for all performances of works in a given library. Access to the works can be locked electronically and unlocked only when the performance of the work has been paid for by the appropriate fee. This system would enable enormous libraries of works to be loaded, for example, into storage contained in a rental car. Only those libraries or those works for which fees were paid would be unlocked and made available for performance in the car. Such a library could include, for example, 10,000 works or more. In a system arranged to charge a fee to the user for works performed, user access to the actual data of which the works are comprised may be prevented, for accesses other than the performance. Permission for modifying works present on the storage system of the device, where modification includes deleting or adding works, copying, or operations on data or data files, would be limited to owners of the works, or those given explicit permission to access the data by the owners of the works.

A user's preference information derived from use of one or more local devices (which may or may not be owned by the user) can be applied at other local devices (including those not owned by the user) to present works to the user that he is likely to prefer, without the user having any knowledge of works stored in the other local devices or hosts that serve them.

In another example of use of a local device, the device can be configured to permit the user to indicate expressly that he would prefer another work to be performed that is like (or unlike) another work, for example, a work that is currently being performed or which has just been completed. The user could enter that information through a user interface.

Preference information developed during the playing of works from one library of works may be applied to other libraries and the two libraries may have some works in common.

Two or more different users may generate bodies of preference information or preference data and the system may aggregate them to generate a shared body of preference information that can be used to generate play sequences and downloads of works for use by the respective users or by other users. For example, a set of college friends may agree to have their preferences pooled in order to generate play sequences that are representative of their joint preferences. The same aggregated information could also be used by users who were not members of the original group. In aggregated preference information, the preference information of one user may have been generated for a different library of works than the preference information for the second user. One way of aggregating the preference information is to maintain, for each user, a list of the works that were played and which actions were performed on them (were they played, skipped, rated?), or a list of elemental feedback operations (Track X: implicit positive; Track Y: implicit negative, ...). To merge the data, both sets of feedback data are run through the same metadata network described later.

In cases in which the personal device has limited storage, the subset of works (from a larger library) that are stored on the device can be adjusted by adding and deleting works over time to reflect the preferences of the user. Thus the device would hold a changing subset of the larger library, which would be repeatedly updated. The works stored on the local device at a given time have an ever increasing likelihood on average of being preferred by the user.

The updating of the sub library of works and of the play sequences from the host to the local device may be done in the background in such a way that the user is not explicitly aware that the transfer is taking place.

When the user makes use of a local device he may log onto the device in such a way that the device or the host can identify him, and put into use one or more sets of preference information for the user's session with the local device. The user may be allowed to select a set of preference information from a list.

Implementation of a system for use with the IPOD, for example, could be based on publicly available information about the database maintained by the IPOD. See, for example,
http://sourceforge.net/docman/display doc.php?docid=11191&group id=52976;
http://sourceforge.net/docman/display doc.php?docid=11212&group id=52976;
http://ipod-on-linux.sourceforge.net/docs.php; http://neuron.com/~jason/db.py via; and
http://neuron.com/~jason/ipod archive.html, all incorporated by reference.

That publicly available information indicates that the IPOD database is split between two files, one called "itunesdb" and one called "play counts". "itunesdb" contains a list of tracks stored on the IPOD, including (among other information): the filename, the track number, the track title, the album title, the artist name, the composer name, the genre, and list of play lists stored on the IPOD.

play counts" contains one entry per track the entry storing the last-time-played, the number-of-times played, and a track rating (based on 5-star system). This file is created by the IPOD, and is updated whenever a track is played or the user changes a rating.

A simple program to use the information in the database could work this way:

Read "itunesdb" and get a list of all the tracks, along with their filename, album titles, artist names, and genres. Create a metadata network based on these, with genre at the top, followed by artist, album, and then filename. Create a list of all the playlists in the IPOD, including reconstructing a list for each album based on the metadata in itunesdb.

Read "play counts" and sort it into order by last-time-played. For each sequential pair of tracks in the last-time-played list, look for the smallest gap between those tracks (in terms of number of intervening tracks) in the list of play lists. Each track in the pair is given positive implicit feedback, and all of the tracks in the gap are given negative implicit feedback, If any tracks were rated, positive/negative explicit feedback is given as appropriate. All of this feedback is saved to a data file, and it accumulates over time.

Process all previously-saved feedback through the network.

Run the play list generation algorithm (see discussion below) in a batch mode to generate a new play list, i. e., have it sequentially choose some large number of tracks as if each track were played without feedback.

Insert the play list back into "itunesdb".

Additional information useful in understanding how to implement the techniques described above is set forth below.

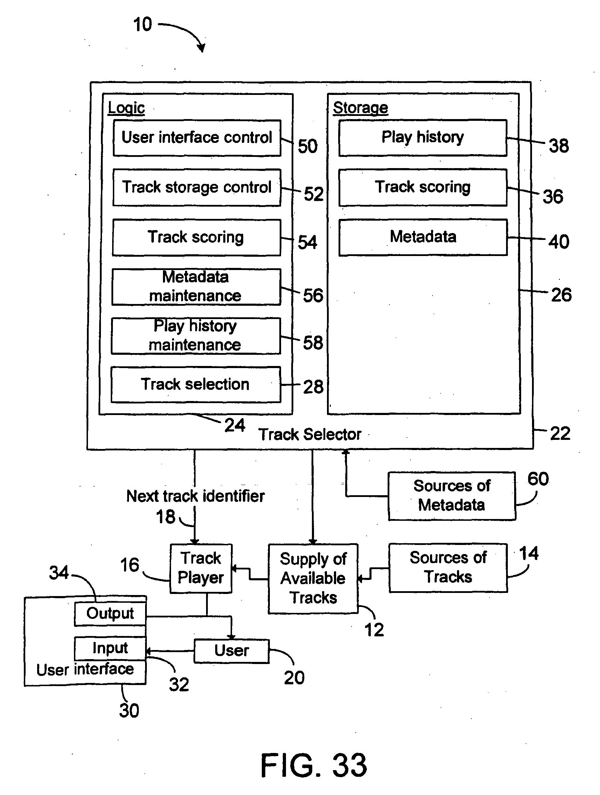

As shown in figure 33, in one example of a system 10 for selecting items based on user preferences, the items are pieces of music (tracks) that are part of a supply of available tracks 12.

The tracks are supplied from sources of tracks 14 that could include media such as audio tapes, compact discs, minidisks, digital versatile disks, or other sources including broadcast media, wireless connection, satellite radio, streaming media over the Internet or some other computer network, or any other source. Thus, while we use the word tracks as if the items only appeared as tracks on tangible media, we mean the word tracks to include any items in whatever form they are created or stored or delivered to a user.

Also, although we will use the example of music in much of our discussion, the items as to which preferences are being expressed can be any kinds of items, including audio, video, and multimedia items and non-audiovisual items including records of a database, items available by searching on the world wide web, or features of a software program, among others. Similarly, any kind of source of tracks 14 would be possible including sources available commercially and sources produced by the user, for example. We use the terms CD and compact disc to include all types of sources of tracks. In some cases, for instance where tracks represent features in a software program, the source of tracks will be the system itself (since the software is the "source" of its own features). Alternatively, in this example, a CD could represent a logical subset of the features in the software, for instance, all text formatting commands could constitute a single CD, where each command would be a single track.

The supply of available tracks may be stored in a mass storage device so that they are available locally as needed. The storage device could include a hard disk (including a portable hard drive), a CD-RW drive, a tape recorder, a video recorder, a memory device, or any other storage device that can hold multiple items for performance to a user. For simplicity, we refer alternatively to a hard disk or a storage device throughout; any storage device that provides read access (with or without write access). In some cases, it may not be necessary to store the available tracks locally. Instead, it may be possible to make them available on-the-fly from a remote source through a wired or wireless communication channel. When storage is used, the system can provide a mechanism for capturing the tracks, converting them to an appropriate format, generating associated identifying information, and recording them on the storage medium.

In the system shown in figure 33, tracks are played for a user by a track player 16. The track to be played at a given time is identified by a next track identifier 18. The track player could include any device capable of performing tracks for a user in response to signals identifying a track to be played. Thus, the player could include a CD player, a CD changer, a tape player, a wireless music playing device, an MP3 player, a video tape player, a DVD player, a web browser, a display device, a portable digital assistant, a mobile or stationary telephone, or a computer, for example. The nature of the track player depends upon the nature of the track. For instance, where a track represents a feature in a software program, the track player would be the software program itself. In some examples, the track selector may control multiple track players.

When the player receives the next track identifier from the track selector, the track player fetches the identified track from the supply and performs it for the user 20. In the case of audio, video, or other multimedia tracks, the playing of tracks would typically be done sequentially. When the tracks comprise records in a database or resources available through the internet, for example, the tracks may be displayed in groups at the same time based on a set of next track selectors. Thus, we use the words play or perform broadly to mean any display, performance, or other delivery of items to a user in a form appropriate to the track and the user.

The determination of which track or tracks are to be played next is made by a track selector 22. The track selector could take a variety of forms. In some cases it can be a general purpose computer including a microprocessor, memory, appropriate buses and caches, mass storage, operating system software, application software, and I/O drivers for associated input and output devices. In other cases, it could be a custom built set of circuits designed for the specific purposes discussed here. The track selector could be part of an existing system within a vehicle or a building or within a computer or a hand-held device. The entire set of elements shown in figure 33 could be implemented within a hand-held device such as a personal digital assistant, a mobile phone, or a music player or within a system that is situated in a vehicle or a building.

The track selector could include logic 24 in the form of software, firmware, or hardware, and storage 26 in the form of memory or a mass storage device. The track selection is performed by a track selection module 28. Although details of the track selection process are described later, in general, the track selection is based on information provided by the user through a user interface 30 and on information about the tracks that is held in storage 26. In some cases, the information provided by the user is implicit or explicit feedback indicative of reactions or preferences of the user with respect to tracks and the choice of tracks to be played depends on the feedback. The reaction information, which may be the raw information entered by the user, or information (for example, variables) derived from the raw information, is stored and used for purposes that include making the selections of future tracks to be played. In other cases, the track selection is not based on past user preference or reaction information, but only on a more conventional set of commands provided by the user through the input side 32 of the user interface. The conventional commands may be provided through aspects of the user interface that enable a user to specify, for example, that he wants the system to play all of the tracks of a selected CD in track order.

The user interface includes both the input side 32 and an output side 34. The input side may include buttons, knobs, touch panels, speech recognition software, and sensors that may be able to determine implicitly what the user wishes to have the system do or what preference information the user intends to provide. The output side could include audible signals, a display, lights, speech synthesis, or any other device to provide information to the user about the state of operation of the system.

The input side may include explicit and implicit mechanisms for the user to indicate preferences about tracks and otherwise to provide feedback or reactions. The explicit mechanisms can include buttons or other devices that enable the user to indicate directly that he likes or does not like a track, for example, a track being played. Implicit mechanisms may also be used; for example, when a user presses a transport button to skip to the next track, his action can be interpreted as an implicit indication that he did not like the track being played.

The storage in the track selector holds information that enables the system to select tracks for play. Track scoring information 36 may be provided for all of the tracks in the supply of tracks. The track scoring information for all tracks in the supply of tracks may be updated each time any track is played or a user takes any action through the user interface that reflects user feedback and preferences. Tracks are selected based on their relative scores in a manner described later.

Also held in the storage 26 is a play history 38 that records the sequence of identifiers of tracks that were played previously and metadata 40 that holds information about the tacks (for example, the title, the performer, the genre). Alternatively, the metadata may be located in a read-only repository separate from the storage, for instance, on a CD-ROM, or it may be accessed via a wireless mechanism from an external central data source. Other information is also held in the storage and is described in more detail later.

In addition to the track selection module 28, the logic 24 includes a module 50 that controls the interaction with the user interface and a module 52 that controls the storage of tracks into the supply of available tracks. A metadata maintenance module 56 acquires and maintains the metadata, which is provided from sources of metadata 60 and in some cases may be provided directly by the user through the input of the user interface or through a personal computer interface to the storage. A play history maintenance module 58 maintains the play history 38. A track scoring module 54 may maintain data about user responses to previously played tracks and may assign scores to tracks for use by the track selection module 28. Other logic modules may be included as will become clear from the discussion below.

The item selection system 10 provides a user with simple intuitive access to items, such as music tracks, that satisfy the user's preferences, without requiring advance configuration. The system selects items, i.e., tracks, from the supply automatically, taking account of past and current user behavior and internal knowledge of the content of the items. The system is arranged so that the providing of feedback from the user is simple. With minimal involvement from the user, the system selects items that he is interested in.

In one simple example of the operation of the system, when a user is listening to a track, he may push a preference button that indicates he likes the track or another preference button that indicates he dislikes the track. In either case, the information about his preference is accumulated and stored as part of a score for that track. At the same time, the preference information is used to change other tracks' score, for example, other tracks on the same CD or other tracks in other CDs by the same artist. When the user indicates that he dislikes the track the system may jump to another track. The user can again indicate his preference by pushing one of the preference buttons and the information is again used to rescore the tracks. If the user allows a track to play through completely, or he presses the transport button to force the system to jump to the next track, that implicit preference information is also used.

The score of a track may be adjusted to account for information from music critics about which track or tracks of a CD, for example, are the better tracks or the worse tracks. In one example, critics may identify the best track of a CD and that information may be used to enhance the score of that track. The effect is that, when a CD is first played, the track that was identified by critics as the best has a higher probability of being played first. If the "best" track is played first, the user is unlikely to indicate a negative preference (thumbs down) for that track, and it is more likely that the track scoring system will learn the user's true preferences with respect to the tracks on the CD.

When the system is operating in a mode in which it is automatically choosing tracks, each track in the supply of available tracks has a non-zero probability of being played next in accordance with an algorithm that considers the scores of the tracks. Thus, the system adapts quickly and effectively to the users preferences and does so while requiring only a limited amount of interaction by the user to indicate his preferences. More details about the manner in which the user expresses preferences, the manner in which the system selects a track for play, and the manner in which the track scores are maintained is set forth later.

Benefits

Among other advantages of the selection system are one or more of the following:

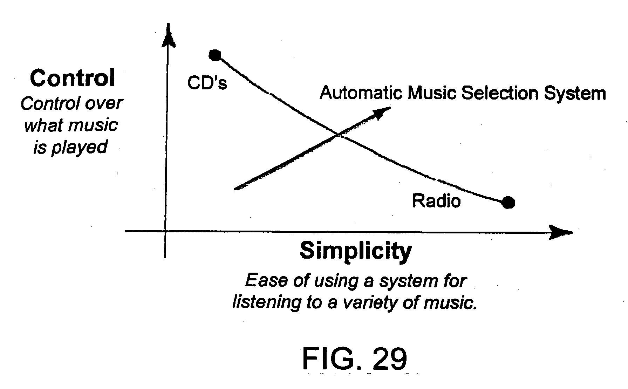

(1) Simplicity. The system provides simple access to the collection of tracks. The system permits a user to merely press the "power" button and start to hear tracks that he or she enjoys.
(2) Control. The system provides this simple access without the user losing control over what is played. By expressing simple responses to the track that is currently playing, he or she may affect what the system chooses to play next. In the music field, CD players permit a high degree of control but may require substantial user involvement in the music selection process, reducing overall simplicity. Radio requires minimal user involvement, permitting a high degree of simplicity, but permits little control. See figure 29. When applied to musical tracks, this system is intended to bridge that gap.
(3) Access. The system provides access to an entire stored collection of tracks without the original medium necessarily available.
(4) No setup. The system provides this control without requiring a user to decide what to play ahead of time.
(5) Safety. The system allows the user to enjoy his entire collection while still safely operating a motor vehicle, or engaging in other tasks that require close attention.

Platforms

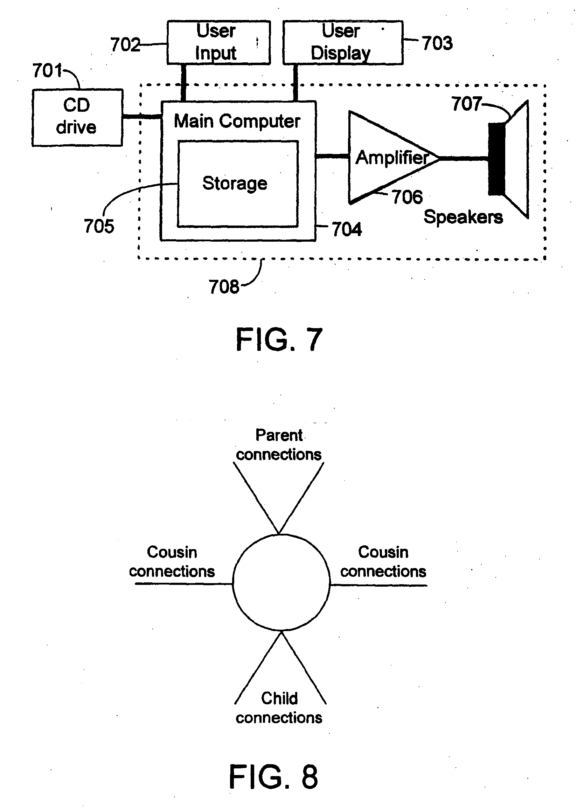

In the context of music items, the selection system may be embodied in a hardware system of the form depicted in figure 7. The system 708 includes a computer 704, a storage device 705, an amplifier 706, and speakers 707. External components may include a CD drive 701, a user input 702, and a display for the user 703.

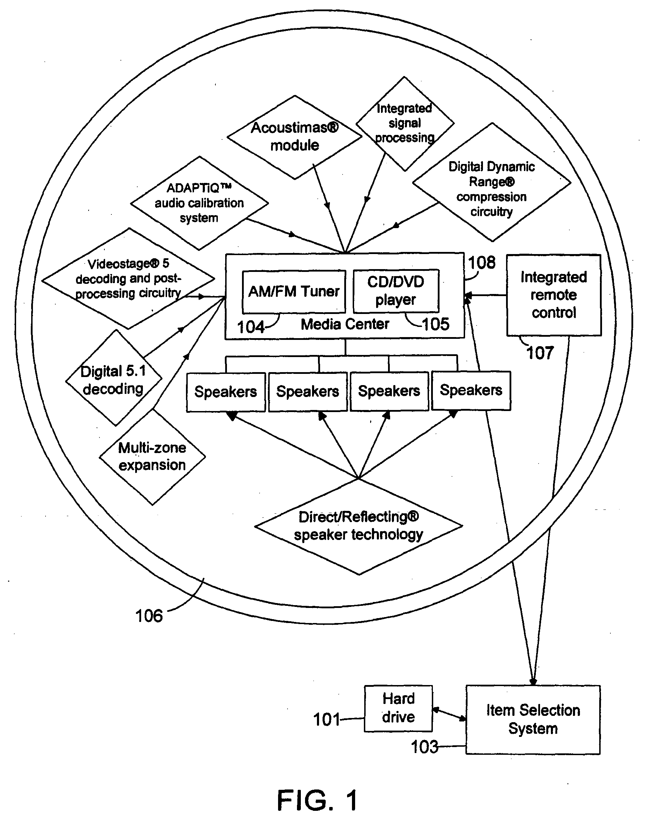

Three possible platforms for incorporation of the selection system are shown in figures 1, 2, and 3, although a wide variety of platforms could be used.

As shown in figure 1, the system 103 may be built into a home entertainment system such as the Bose Lifestyle 35 (106) by adding a hard drive 101 to store music for later playback. The system would then determine the sequence of tracks to be played and would provide them to the entertainment system from the hard drive. User preference information and feedback could be received from the user at the integrated remote control 107 and sent back to the system 103 for use in determining future tracks to be played. The entertainment system 106 would have the capacity to play music from AM and FM radio 104, compact discs or DVDs 105, or its hard drive 101, and would be multi-zone capable, permitting it to play different items of music in different areas of a house. The remote control 107 would interface both with the core unit 108 and with the item selection system 103.

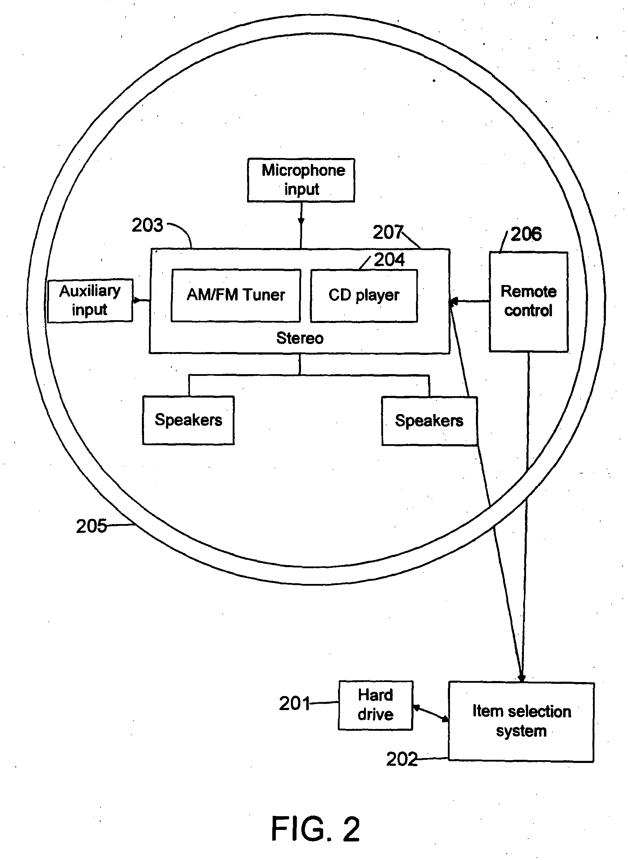

In another example, depicted in figure 2, the item selection system 202 could be hosted on a smaller unit, such as the Bose Acoustic Wave Music System 205, again by the addition of a hard drive or other random access storage medium 201. In such a configuration, the system could play music from AM and FM radio 203, compact discs 204, and its internal hard drive 201. The remote control 206 would interface both with the core unit 207 and the item selection system 202.

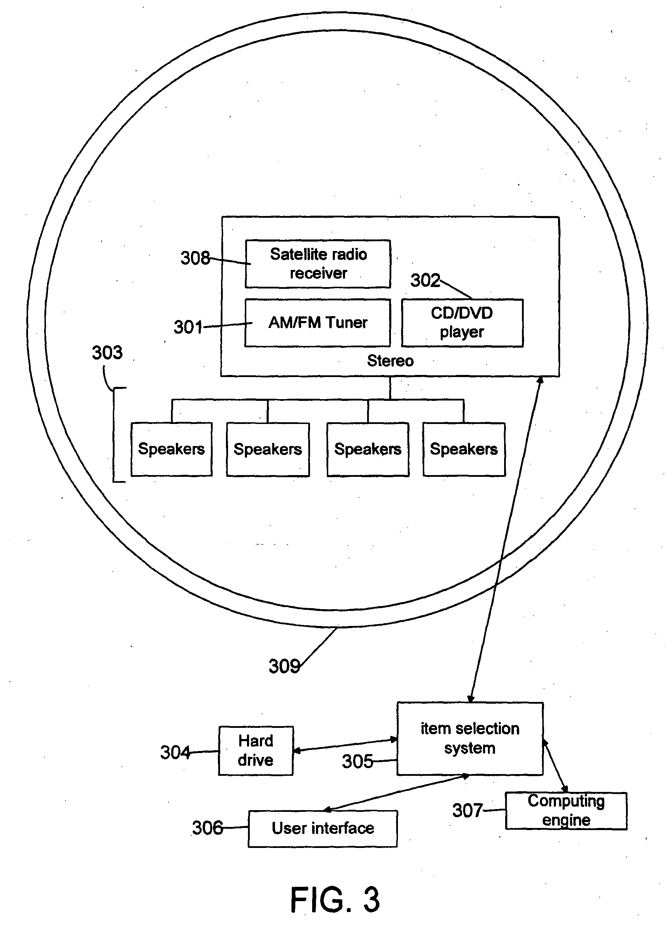

In a third example, shown in figure 3, the item selection system 305 could be integrated into a vehicle's music network. In this implementation, the system would supplement a standard car entertainment system 309 (which would include, at minimum, an audio source such as a compact disc player 302 and speakers 303) a hard drive or other random access storage medium 304, a computing engine 307, and additional user interface controls 306, and would link into the car's audio-visual network. In this configuration, the system would play music from its internal hard drive 304, which would in turn be able to record music from AM and FM radio 301, CDs or DVDs 302, and potentially a satellite radio 308.

As noted earlier, the system could also be embodied in other platforms, such as a video jukebox system, a database engine, or a software program (where the items to be selected might be features or menu items).

Modes of operation

As mentioned earlier, the system can play tracks from a variety of sources, for example:

(1) CD/DVD. The system plays a currently-loaded CD/DVD disc. In this mode, with respect to the currently-loaded CD/DVD disc, a user can select standard options available on compact disc players, for example, play, pause, next track, and previous track. Operation in CD/DVD mode continues until a new mode is selected.
(2) AM/FM/satellite radio. The system operates as a standard AM/FM radio, or as a satellite radio.
(3) cassette tape. The system operates as a cassette player.
(4) stored tracks. The system plays tracks from its internal hard drive.
(5) the Internet. The system plays tracks retrieved from another computer located on the Internet.
(6) internally. For instance, when tracks are features of computer software, there may be no external data necessary.

When the system plays tracks from its hard disk, or where no external data is needed, it may operate in one of the following modes:

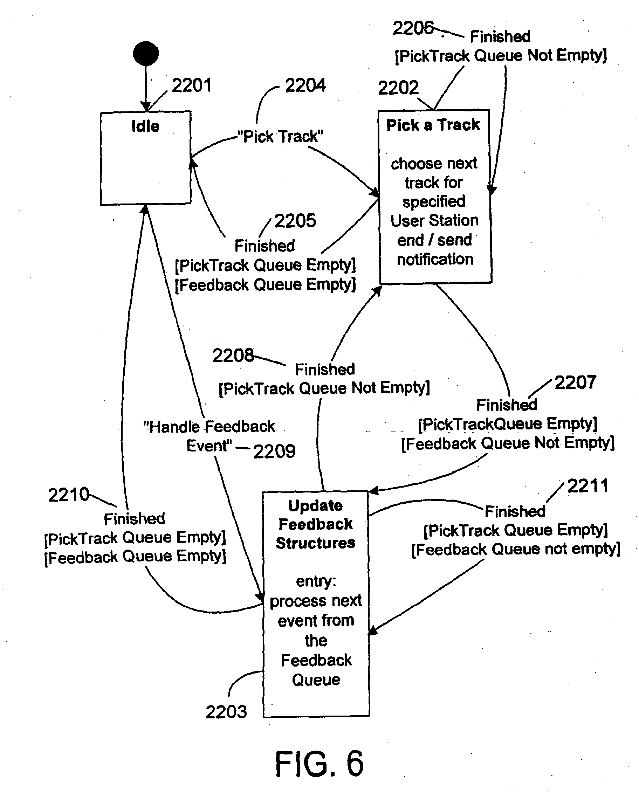

(1) an automatic selection mode. As shown in figure 6, in this mode, the system plays, a selection taken from all tracks available to the system. The user provides feedback, explicitly and implicitly, regarding the tracks that are played. The feedback may represent user preferences. The system selects the track for the user based on user feedback (emphasizing more recent feedback) and a history of recently played tracks. The selection system may also take into account feedback stored in a current so-called user station (see "Stations and Presets," below). In some implementations, for greater simplicity, the automatic selection mode is the default mode, and, when any other mode has completed playback, the system reverts to the automatic selection mode.

Figure 6 describes the process by which the selection system functions when in automatic selection mode. Track selection is accomplished by the automatic selection module (see "Modules," below). The automatic selection module is initially in an idle state 2201. (Note that other modules may not be idle; in particular, the system may be playing a track.) When the module receives a notification 2204 that it is time to pick the next track (a signal could be provided by the player indicating that the prior track has been or is soon to be.completed), as described in the "Modules" section, it switches to the "Pick a track" state 2202. It then picks the next track to play, as described in later sections. If further pick-track requests are received while the module is in the pick-track state, it adds them to a pick-track queue. If, when the module has completed picking a track, there are no items in the pick-track or feedback queues, the system returns 2205 to the idle state. If there are further pick-track requests, the system returns 2206 to the pick-track state.

When the module receives a feedback event (i.e., a message from the user interface module that there has been an implicit or explicit indication from the user with respect to the track currently being played), if the module is in the idle state, the system switches 2209 to the "Update Feedback Structures" state 2203. If the module receives the message while it is in the pick-track or update feedback structures state, it places the event on the feedback queue. When the module completes the pick-track process, if the feedback queue is not empty and there are no more pick-track events, the module switches 2207 to the "Update Feedback Structures" state. There, it updates the stored tracks graph, as described below. When it is finished, it returns 2210 to the idle state, if the feedback and pick-track queues are empty. If the feedback queue is not empty, the module returns 2211 to the update feedback structures state. If the pick-track queue is not empty, the module returns 2208 to the pick-track state.

Other embodiments permit the user to specify that automatic selection mode should operate on the CD or album level, rather than on the track level. In this configuration, automatic selection mode would select a CD that it anticipates the user is interested in, then play the CD from start to finish.

(2) a tracks mode. In this mode, the system plays only pre-specified tracks, for instance, only those tracks listed in a given preset defined by the user, or all tracks on a particular CD or album. This mode may have several playback options including (a) normal, (b) shuffle and (c) repeat.

(a) a "normal" option causes the system to play through all the tracks in the order in which the user programmed them. At the conclusion of the last track, the system may return to automatic selection mode.

(b) a "shuffle" option causes the system to play the tracks specified by the user in a random order. When all the tracks have been played, the system may return to automatic selection mode.

(c) a "repeat" option will cause the system to stay in tracks mode until the user directs the system to change. This mode can be used in conjunction with the "normal" or "shuffle" options to determine in what order the tracks are played before they are repeated.

(3) a bins mode. In this mode, each preset (represented by a user interface object such as a keypad button on a control panel) contains one or more CDs. The system will play tracks from any CD the user has added to the current preset. If a CD has only been partially stored, the system plays only those tracks that have been stored. In systems that implement bins mode, CDs may be added to and deleted from bin presets through the settings-menu. In some examples, when the system is playing stored tracks in any mode, a user may press and hold a preset key in order to add the CD from which the current track was recorded to that preset. The order in which the tracks are played is specified by the same playback options described under "Tracks." At the conclusion of play under the "normal" or "shuffle" option, the system may return to automatic selection mode.

(4) a Virtual CD Changer mode. This mode is similar to bins mode except that each preset represents only a single CD. Thus, the user may press a button on the keypad 1805 to select a CD to play. Alternatively, the user may enter a two- or three-digit code to select a specific CD. The user may also select one of the playback options described in "Tracks." These options apply to only the current CD, although an additional option might permit them to apply to all tracks on all CDs in any of the presets. At the conclusion of playback, the system may return to automatic selection mode.

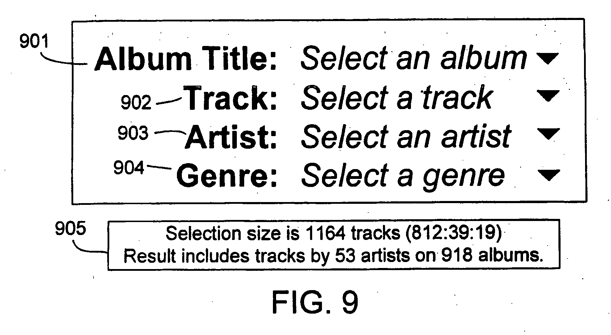

(5) a search mode (see figure 9). In search mode, the user can scroll through displayed lists of the available content sorted by disc number, artist, or other information that may be available. The user may select for playback an entire disc, an artist, a genre, or any combination. The user may, alternatively, enter a code representing a CD that has been recorded to the system's hard disk to play tracks from that CD.

Playback options described for the tracks mode apply to search mode as well. At the conclusion of play under the "normal" or "shuffle" option, the system returns to automatic selection mode. Playback actually takes place in tracks mode; search mode merely sets up a special playlist for playback by tracks mode.

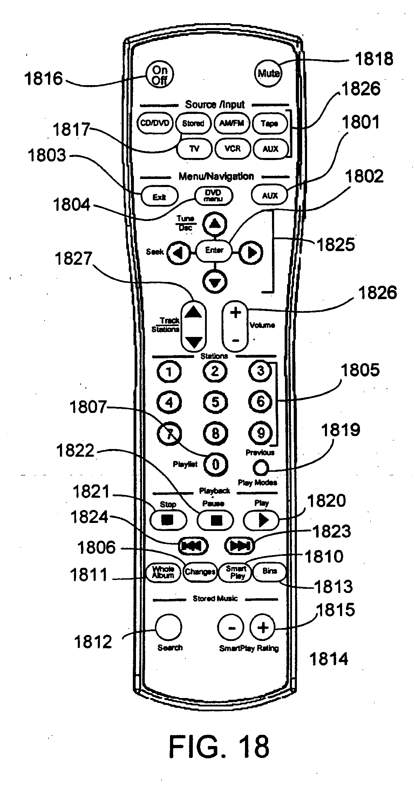

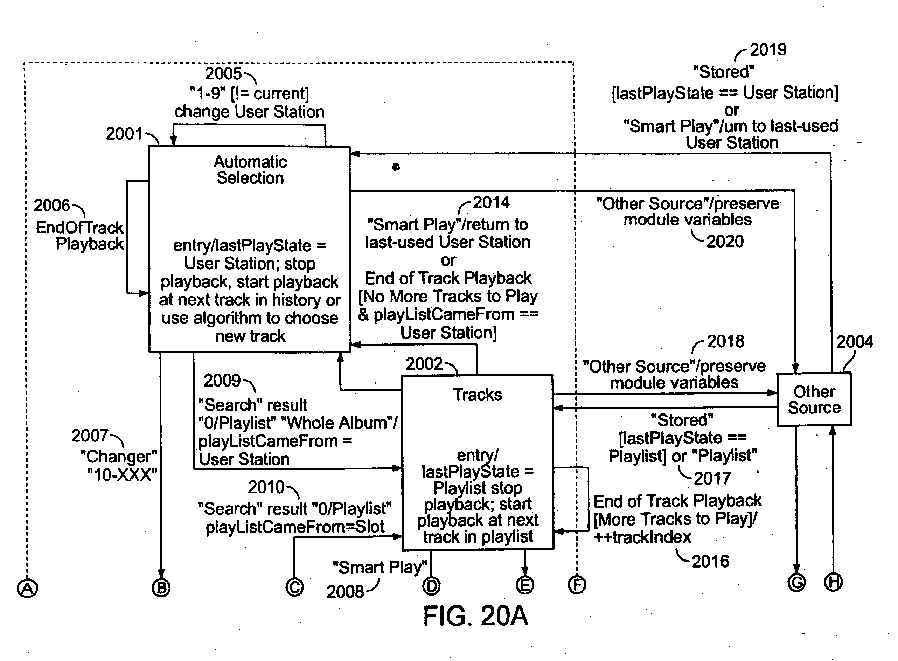

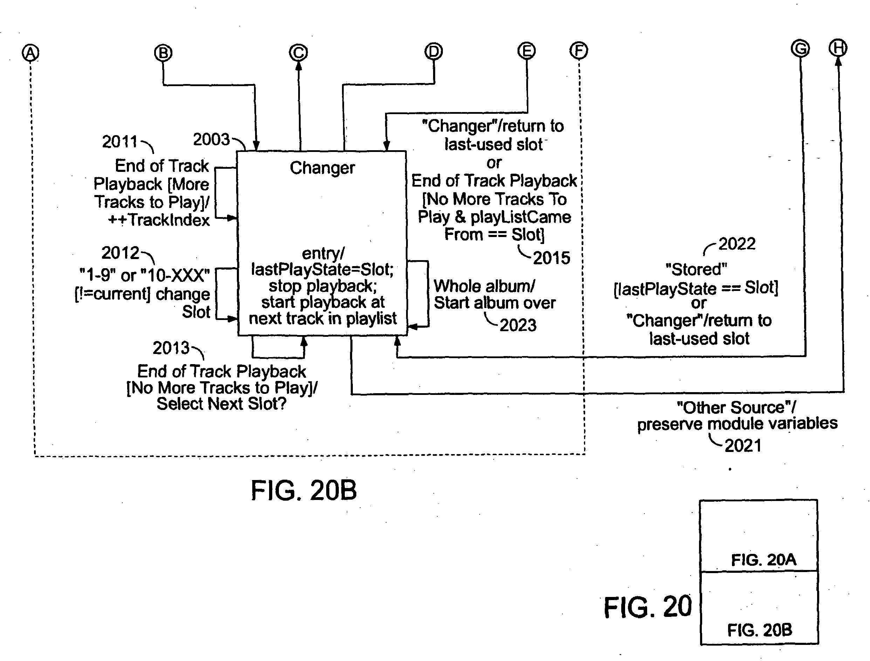

In one example, the system maintains only one playlist; the user activates this playlist by pressing 0 on the keypad. In this example, switching among some of the modes takes place according to the state diagram in figure 20. The system begins, by default, in automatic selection mode 2001. The user can change the user station (see "User stations and presets," below) 2005 by pressing the corresponding button on the keypad 1805 of a remote controller (see figure 18). As a track completes 2006, the system remains in automatic selection mode and chooses a new track. When the user presses changer 1806, the system switches 2007 to changer mode 2003. In changer mode, if the user presses a keypad button or selects a CD by directly entering a code, the system stays 2012 in changer mode 2003, and begins playing tracks from the CD whose code was specified, or from the CD assigned to the keypad button (here called a slot). At the end of a track, the system plays 2011 the next track. When the CD is completed, the system begins to play 2013 the CD specified by the next slot. That is, if a user presses keypad button 2, the system plays the CD in slot 2, and then plays the CD in slot 3. If the user presses "Smart play," the system switches 2008 to automatic selection mode. If the user presses Whole Album from Changer mode, the system remains 2023 in Changer mode but begins the current album from the beginning.

When the user presses search 1812 (and makes a selection from the search screen), playlist 1807, the system switches 2009, 2010 from automatic selection mode 2001 or changer mode 2003 to tracks mode 2002. From automatic selection mode, the Whole Album button also causes the system to switch 2009 to tracks mode. If the search button was pressed, the system sets up a playlist that represents the search results. If playlist was pressed, the system plays the tracks in the playlist. If Whole Album was pressed, the system sets up a playlist that represents each of the tracks on the CD that is currently playing. Tracks mode plays the playlist as described earlier. Playback continues 2016 as long as there are more tracks to play. If the user presses "Smart Play," or if the system completes all tracks in the play list, and the previous state was automatic selection mode, the system switches 2014 to automatic selection mode. If the user presses "Changer," or if the system completes all tracks in the play list, and the previous state was Changer mode, the system switches 2015 to Changer mode.

If the user presses another source button from any of the three states, the system switches 2018, 2020, 2021 to the new source 2004, after saving its state. From the other source, the user may have the currently-playing track recorded to the system's hard disk. When storage is completed, the system returns 2017, 2019, 2022 to the previous state. If the user presses "Smart play" from the other source mode, the system switches 2019 to the most recently used user station. If the user presses "Changer," the system switches 2022 to changer mode. If the user presses playlist, the system returns to tracks mode.

In this example, holding down 0 while a track is playing in changer, tracks, or automatic selection mode adds the current track to the playlist. The user may remove a track from the playlist by pressing a remove button, or selecting an option from the settings menu.

Other implementations permit more than one playlist and some embodiments also implement the "bins" mode, described above, possibly by modifying tracks mode to play full CDs rather than individual tracks from a CD. Some implementations do not include all the modes listed above. Other implementations may include additional or substitute modes. For instance, some implementations might include an "all items by this artist" button, that is similar to the "whole album" button except that it plays all tracks performed by the same artist as the currently-playing track. Other subsets of the search functionality are also possible, such as "all items in this genre."

Dynamic complexity adjustment

The selection system can offer both a complex mode of operation, allowing, for example, for complete control by the user of all functions, as well as a more automatic mode that reduces the number of features available to a user and permits, for example, only simple user control. In situations where the user's attention is primarily focused on another task, some features, for example complex aspects of the user interface, are disabled. During that time, the system offers a simple yet functional interface that can satisfy the user's preferences without distracting him or her from the primary task.

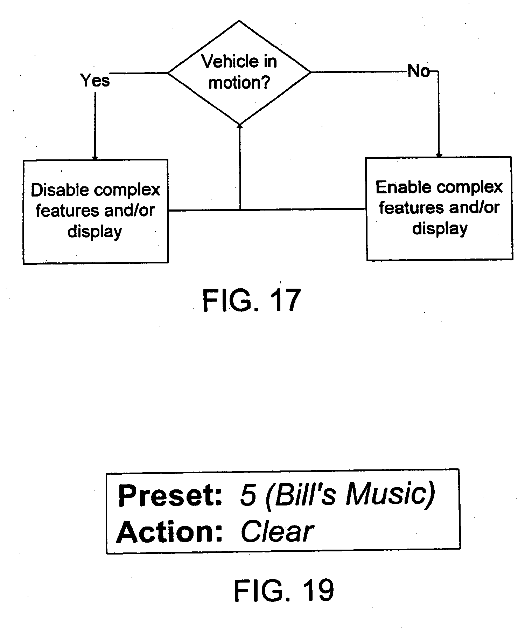

One example of this feature can be used in a selection system that is installed in an automobile (see figure 17). There, it may be configured so that the search mode will not be made available to the user while the car is in motion. This mode may be restricted such that it is only permitted while the vehicle's gears are in park, or the parking brake is set. In any other gear, the other modes are available.

Personal computer connection.

Some embodiments of the system may permit an optional interface with a personal computer. These embodiments permit the user to detach the storage device from the system and attach it directly to the computer. The user could then save to the computer a list of all stored tracks, along with the codes that represent each CD. The user could then print out the codes associated with each CD, for later quick access using the direct access functionality.

While the hard disk is connected to the computer, the user could also take advantage of the computer's hardware to store additional tracks to the hard disk. This might be advantageous, for instance, if the computer's CD player could read and store CD data more quickly than the system's player.

The computer might also provide the capacity to create playlists and to look up metadata for stored tracks from metadata databases that are not available to the item selection system. Finally, the user would be able to save the stored track collection to his computer for backup purposes.

User interface

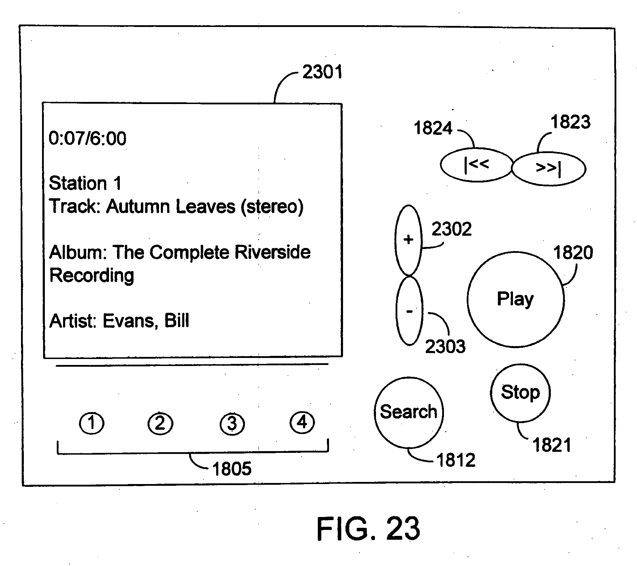

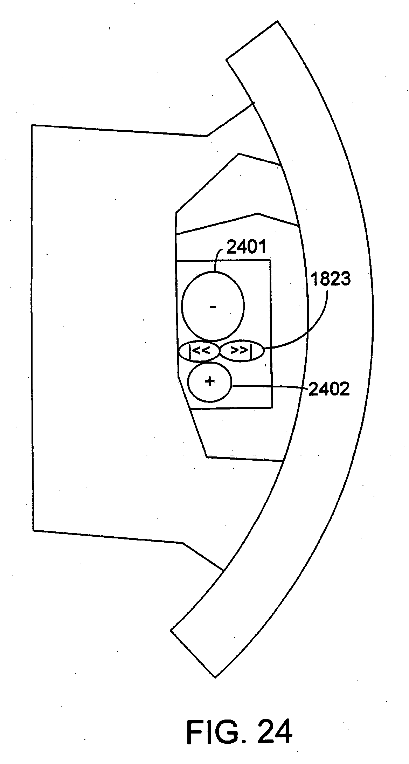

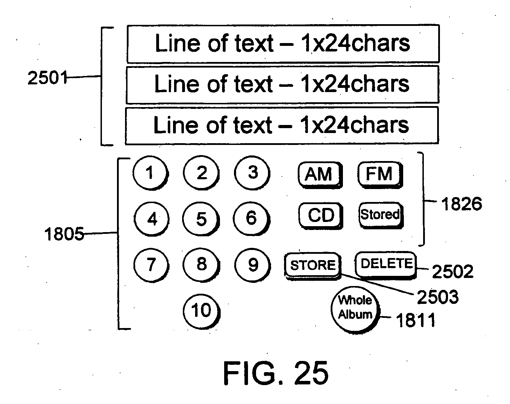

The user interacts with the selection system through interface mechanisms that depend on the platform in which the system is embedded. For instance, as shown in figure 18, the user may employ a remote control. Or the system may be controlled by a control panel, as in figure 23, when embedded, for example, in a home entertainment system. When installed in a car, the system may have certain controls positioned on the steering wheel, as in figure 24, with the remainder of the controls on the dashboard, as depicted in figure 25. Where the system controls the selection of features in computer software, the user interface would be provided by the software itself. Some of the user interface elements described below may not be applicable to non-musical tracks.

The remote control in figure 18 depicts most of the functionality available to the user, although the controls themselves may be located on a console, as selections from an on-screen menu, or elsewhere. The power may be controlled using a standard on/off button 1816. The user may mute the sound with a mute button 1818. The user may choose the source of tracks with a set of buttons 1826. Alternatively, there may be a single button that cycles through the sources available to the system. When the system is in any source mode other than stored tracks, the user may press and hold the "Stored" button 1817 to instruct the system to store the current track to its hard disk. Alternatively, as in figure 25, the system may provide a separate button 2503 to allow the user to store the current track. It also may provide a button 2502 to allow the user to delete the current track, if the system is playing stored tracks. Alternatively, this button might provide functionality to delete all tracks from the current CD or album.

The user can access the system's advanced settings using a settings button 1801. When in DVD mode, the special features and information encoded on the DVD may be accessed with a DVD menu button 1804. Either of these menus may be exited with the exit button 1803. Navigation within these menus is accomplished with the arrow keys 1825. The enter key 1802 is used to accept a selection in either of these menus.

The user may control the volume with the volume key 1826. The current user station (see "User stations and presets") may be changed, when playing in automatic selection mode, and the currently playing track may be changed when in input modes that support changing the track, using a button 1827. The current user station may also be changed by selecting a new station directly from the keypad 1805.

From any mode other than playlist mode, the user may add a track to the playlist, when the track is playing from the system's hard disk, by pressing and holding 0. The user may enter playlist mode by pressing 0 once on the keypad 1807. The user can revert to the previous play mode by pressing the button designated for this purpose 1819.

Control over the currently-playing track may be exercised using standard transport controls. The user may begin playback using a play button 1820; pause playback using a pause button 1822; and stop playback using a stop button 1821. Additionally, the user may skip to the next track using a next track button 1823, or return to the previous track using a button 1824.

When playing tracks on the hard disk, the playback mode may be adjusted using buttons 1811, 1806, 1810, and 1813. The whole album button 1811 causes the system to play all tracks on the album from which the current track was recorded. The changer button 1806 causes the system to switch to Virtual CD changer mode (see "Modes of operation"). The smart play button 1810 causes the system to switch to automatic selection mode. The bins button 1813 causes the system to switch to bins mode. The user may enter search mode by pressing the search button 1812.

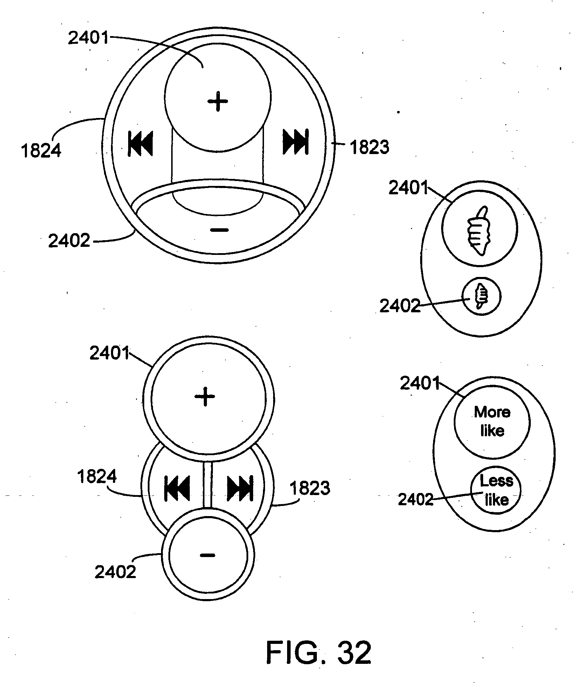

The system includes a feedback mechanism so that the user may indicate reactions to (preferences for) tracks, for example, a currently playing track. This may be accomplished by providing simple + 1815 and - 1814 rating buttons. In other examples, as depicted in figure 23, the + button 2302 is located above the - button 2303 and the two can serve to scroll a preference value between a maximum and a minimum. In other examples, as in figures 24 and 32, the + button 2401 may be larger than, and above, the - button 2402. In some examples, these buttons serve the dual purposes of being the rating buttons when the system is in the smart play mode and as scroll buttons when the system is in other modes of play. Other indicators may be used as well. For instance, instead of + and -, the system may provide a thumbs-up and a thumbs-down indicator. The buttons might also be color-coded (for instance, a red button for a negative reaction, and a green button for a positive reaction).

In addition to the feedback buttons, some embodiments of the system may provide an undo button. This button would completely undo the effect of a previously actuated feedback button on the stored tracks graph (see "Metadata"). It would also be possible for a user to reduce the effect of an unintentional preference indication by returning to a prior track and then indicating the opposite feedback from what was given on the prior playing of the track.

A wide variety of mechanisms could be provided in the interface to enable a user to indicate a positive or negative reaction to a track. More than two buttons could be provided to permit explicit indication of preference from among more than two options. Conversely, the use of a single feedback button would be possible, either a single positive feedback button or a single negative feedback button, or a single button that can be pressed for a time period that would be indicative of the level of preference of the user. Although not as simple, buttons that are meant to provide other kinds of feedback than simply like or dislike would be possible, for example, buttons that would represent types of emotional reactions to a track, such as happy, sad, and indifferent. The mechanism for feedback need not be buttons but could be knobs, dials, thumbwheels, touch screens, speech recognition, biometric readers, or any other device that can receive a user's input. The shapes of the buttons can be different from the shapes shown in the figures.

The shape, contour, location, and other aspects of the feedback devices may be selected to give the user intuitive tactile sensations that correspond to the functions of the buttons. For example, placing the + button above the - button and making the plus button larger than the - button may convey an intuitive sense of the meaning of each of the buttons. The surface contours of the two different preference buttons can be arranged to indicate their meaning intuitively. For example, the + button can have a recessed surface (which is typically sensed as being comfortable) and the - button can have a raised surface (which is typically sensed as being uncomfortable).

It is also desirable to place the preference button or buttons in close proximity to each other and to the one or more principal transport buttons, for example, close enough so that the user can press any of those buttons by motion only of his finger without motion of his whole hand. As shown in figure 24, one useful way to cluster the buttons is in an arrangement in which the + and - buttons are above and below each other and the transport back and transport forward buttons are immediately to the left and right of the vertical axis that joins the + and - buttons. When mounted on a steering wheel, for example, the user can use his thumb to rate and transport without moving his whole hand. In addition to being convenient, such an arrangement may be safer than others for use in a vehicle.

The system may provide feedback to the user with respect to the expressed preferences and other matters. In one approach, shown in figure 23, feedback may be provided on a built-in screen 2301. In another approach, shown in figure 25, the feedback may be provided on an LCD display 2501. The feedback could include identification of the track being played, the user station being played, the length of the track, the elapsed time, and an indication of the system's interpretation of the user's likely preference level with respect to the track being played.

Some embodiments may augment or replace the buttons and display described above by a voice response system. The system would provide oral feedback to the user, and would listen for oral commands. Alternatively, the system could provide oral menu choices, which may be selected by a button press or a verbal response.

Display

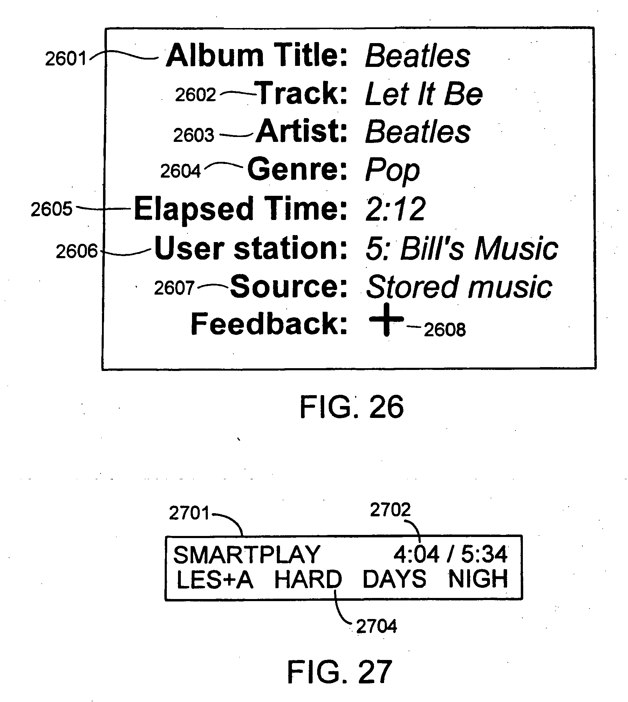

In embodiments that provide feedback to the user using an on-screen display, when the system is playing from stored tracks, the system may display information about the currently-playing track, as depicted in figure 26. The system may display the name of current album 2601; the title of the current track 2602; the name of the artist 2603; the genre 2604; the elapsed time in the current track 2605; which user station is currently playing 2606 (see "User stations and presets"); and what the source of the track is 2607.

In search mode, as depicted in figure 9, the system may display a menu permitting the user to search by genre 904, artist 903, track 902, or album 901. The system may display the scope of the current search results 905, which could initially be the entire set of stored tracks. In some examples, the initial scope of the search is based on the currently playing track. The user can then easily select similar tracks, for instance, by the same artist, or on the same album, or in the same genre, relatively quickly.

When the user wishes to edit a preset or a user station, the system may display a screen as depicted in figure 19. If the preset is not a user station, the user may add or delete a given track to or from the preset. If the preset is a user station, the user may give it explicitly positive or negative feedback with respect to the station.

When a smaller display is necessary, such as in an automobile or in a portable stereo system, the display could take the form shown in figure 27. The system would continuously display the current mode 2701 and the elapsed time 2702. It could also scroll across the screen information about the current artist 2703 (e.g., "The Beatles") and the title of the current track 2704 (e.g., "Hard Day's Night").

When the user presses an explicit feedback button (e.g., buttons 1814 or 1815 in figure 18), in any embodiment, the display could acknowledge the feedback (e.g., by temporarily displaying an acknowledgement message such as "Feedback acknowledged"). In some embodiments, the acknowledgement would be displayed upon receipt of implicit feedback as well as explicit feedback.

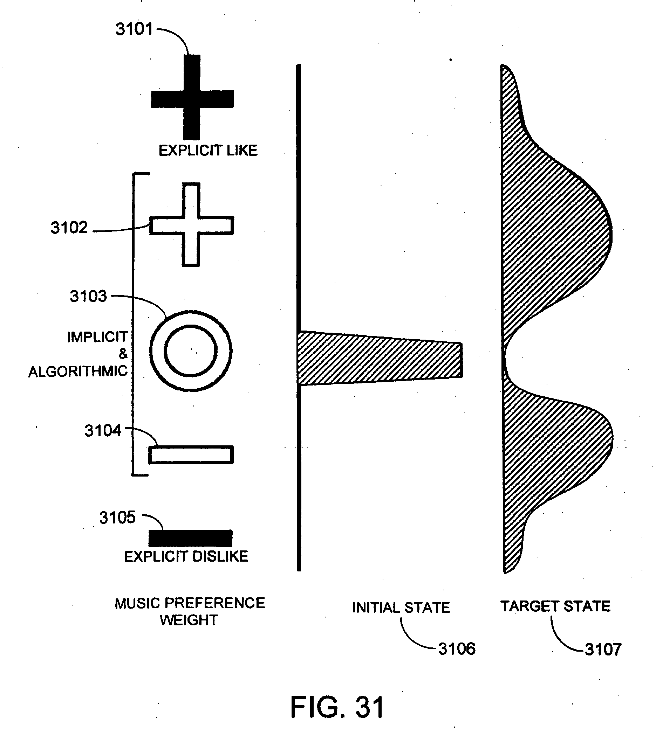

When the system is playing a track the display could show an indicator 2608 (figure 26) that represents the system's understanding of the preference level of the user with respect to that track. The indicator could be, for example, one of the five icons shown in figure 31. The five icons could include a solid plus 3101, an outline plus 3102, a circle 3103, an outline minus 3104, and a solid minus 3105. Other icons, other numbers of icons, and other meanings of icons could be used as well.

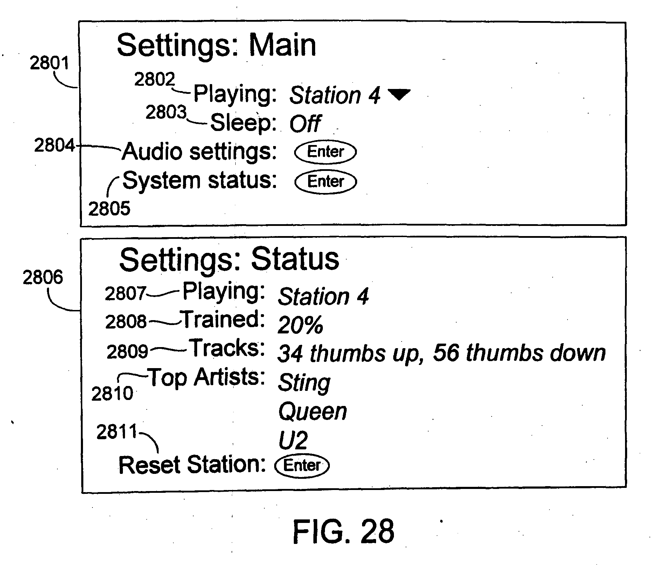

When the user enters a settings mode, see figure 28, a settings screen 2801 will appear. The screen may allow the user to change the currently-playing preset or station 2802. It may allow the user to configure the system 2803 to turn itself off after a user-specified amount of time, or to turn itself on at a specified time of day. It may permit the user to adjust standard audio settings 2804 such as treble, bass, and balance. It may permit the user to view and modify advanced settings 2805.

If the user chooses to edit advanced settings, a screen such as 2806 may appear. There, the system will display the currently-playing station 2807; display information about how many tracks have had some feedback recorded 2808 and what that feedback is 2809; and display the artists with the highest feedback ratings in the current station 2810. It may also permit the user to clear all information in the current station 2811.

If the system uses voice synthesis rather than on-screen display, similar information and options could be presented to the user orally.

User stations and presets

Conceptually, a preset represents information about each stored track that affects the system's selection of which tracks to play. The mechanism by which the system uses this information depends on the current mode, and some preset information will only be applicable to certain modes. For instance, when in tracks, bins, or virtual CD changer mode, a preset will contain simple yes/no data for each stored track or album, representing whether that track or album is in the current preset or not. In user station mode, a preset will contain information the system uses to select tracks in automatic selection mode. For instance, in figure 12, it might contain the feedback record 1213 for each node in the stored track graph (see "Metadata").

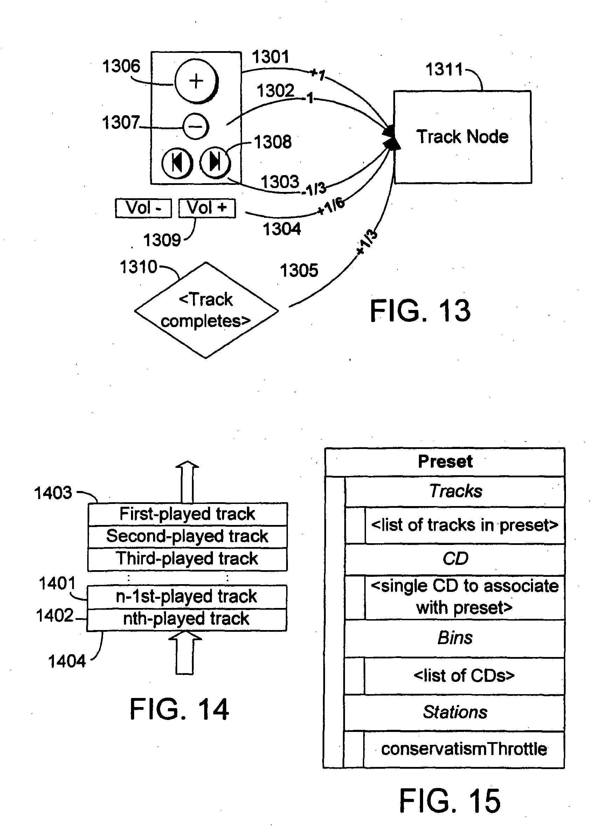

The selection system may maintain a set of presets of arbitrary number (see the database schema of figure 15). For example, the system could maintain four presets, each represented by a button or other user interface item on the physical user interface labeled one through four (see figure 23 item 1805). While a track is playing in any mode, the user can specify that the track should be added to a given preset, for example by holding down the corresponding button. When the system is in automatic selection mode, this has the same effect as giving the current track a positive rating. The user activates a preset by pressing the corresponding button. Each preset can be assigned a number or name for purposes of display and selection.

As shown in figure 15, the system may maintain at least three types of presets. One permits the user to assign individual tracks to a preset to create a play list. The second permits the user to assign a CD or group of CDs to a preset to play tracks from those CDs. The third type of preset is called a user station. In addition the user can set a CD preset to play a single CD.

A user station is a preset used in the automatic selection mode. Each user station associates a probability with each track stored on the system. The probabilities are generated by the automatic selection algorithm, described below, and are dynamically updated based on, for example, user indicated preferences, either implicitly, explicitly, or a combination of both. While a preset is in use, selection of tracks to be played is based on a specific set of probabilities associated with the entire collection of tracks, stored in the preset. Several presets can be defined as a way to play tracks that are selected based on different probabilities of items in the entire collection.

In some embodiments, user stations may be associated with individual users. Thus, if there are three users of the system, user station 1 may reflect user 1's preferences; user station 2 may reflect user 2's preferences; and user station 3 may reflect user 3's preferences. User station 1 would play selections based on scoring of tracks that is derived from user preferences indicated during the playing of tracks by user station 1, and so on.

Some embodiments may permit automatic identification of the user, and automatic use of his presets. This may be accomplished by means of biometric identification. For instance, the system may be equipped with voice recognition capability and the user may be identified by the sound of his voice. Once identified, the system could switch to that user's station automatically. Other systems may use fingerprint identification, retinal scans, or other biometric measurement techniques. Still other systems could interface with external identification devices. For instance, a system embedded in an automobile might switch to user 1's station when the user changes the driver's seat position to a previously stored preferred position of user 1.

In some cases, instead of updating a preset automatically each time the system receives feedback from the user, the preset could be updated only upon explicit instruction from the user. In that way, the user can return to a preferred preset even after a session in which the preset was used to select a sequence of play items.

Modules

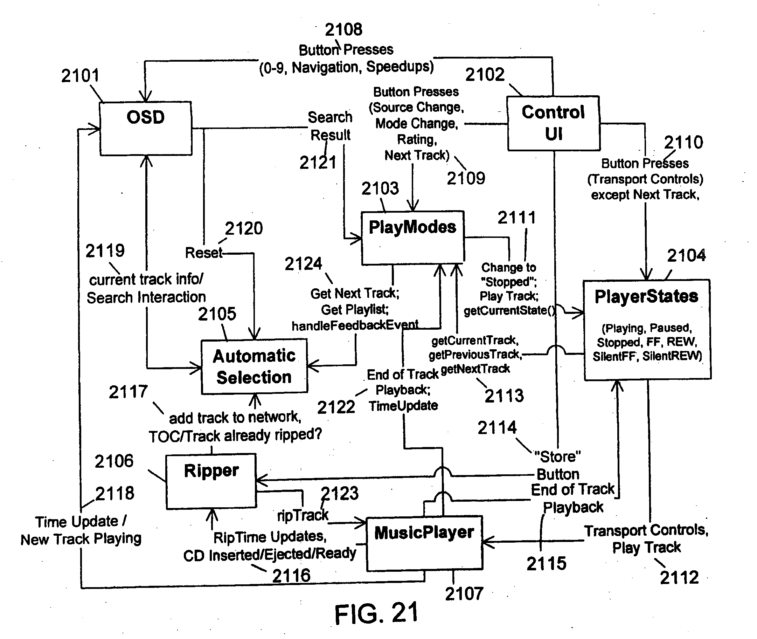

Figure 21 represents the functional modules contained in one possible embodiment, and the nature of their interaction. In this embodiment, the MusicPlayer 2107 controls the playing of tracks in response to inputs and provides status information on the playing of tracks in the form of EndOfTrackPlayback and TimeUpdate messages 2122 to the PlayModes module 2103. It sends TimeUpdate and NewTrackPlaying messages 2118 to the Onscreen Display (OSD) module 2101. It sends an EndOfTrackPlayback message 2115 to the PlayerStates module 2104. It sends RipTimeUpdate, CDInserted, CDEjected, and CDReady messages 2116 to the ripper module 2106 (see below), to tell the ripper module how much time is left in the ripping process, when a CD has been inserted, when a CD has been ejected, and when a CD is ready to be stored.

The ripper 2106 responds to store commands from the control user interface module 2102 and sends messages 2117 to the automatic selection module to add stored tracks to the stored tracks graph (see "Metadata"). It can also ask the automatic selection module 2117 if a given track has already been stored in the graph. The ripper module sends ripTrack messages 2123 to the MusicPlayer module to instruct the MusicPlayer module to actually store the track. The MusicPlayer sends a confirmation message when it is completed.

The PlayModes module 2103 responds to button presses 2109 from the control user interface. It sends messages 2111 to the PlayerStates module 2104 to change the current state to "stopped" or "playing." It can also query 2124 the automatic selection module to find out what track to play next, or to get the current playlist. It can also instruct 2124 the automatic selection module to handle a feedback event. It also maintains a track history and state for user stations (see "User stations and presets") and for the Virtual CD Changer (see "Modes of operation").

The PlayerStates module 2104 responds to transport control events from the user's control and commands from the PlayModes module. It also acts as an interface between the remote control and the MusicPlayer module. It passes on transport control and play-track instructions 2112 received from the control user interface and the PlayModes module to the MusicPlayer module. It can query 2113 the PlayModes module for the current, previous, and next track.

The On-Screen Display (OSD) module 2101 presents information about what is currently playing to the user. It handles user interactions for "resetting" or otherwise editing presets, and can send a reset message 2120 to the automatic selection module. It also displays the user interface for the search interface, and sends the search results 2121 to the PlayModes module. It queries 2119 the automatic selection module to retrieve search results (given search parameters provided by the user to the OSD module). It also queries 2119 the automatic selection module for information about the currently-playing track, to present to the user.

The automatic selection module 2105 selects which tracks to play when the unit is in Automatic Selection mode (see "Modes of operation"). It maintains all feedback information for all user stations (see "User stations and presets"). It conducts searches when requested by the user via the OSD module, converting queries formulated by the OSD module into a list of tracks to play. It supplies the OSD module with information about the currently-playing track. It responds to requests from the user interface to edit data in the stored tracks graph. Since this module maintains the stored track graph, when the system is in Virtual CD Changer mode, tracks mode, or bins mode, the PlayModes module must query 2124 the automatic selection module to ascertain from this data structure what the next track to be played is.

The control user interface (ControlUI) 2102 module dispatches user events. It sends button presses 2108 to the OSD module, for user interaction, for instance in search mode. It sends source change, mode change, rating, and next track messages 2109 to the PlayModes module. It sends transport control messages, except next track messages, 2110 to the PlayerStates module. It sends store button presses 2114 to the Ripper module.

Storing tracks

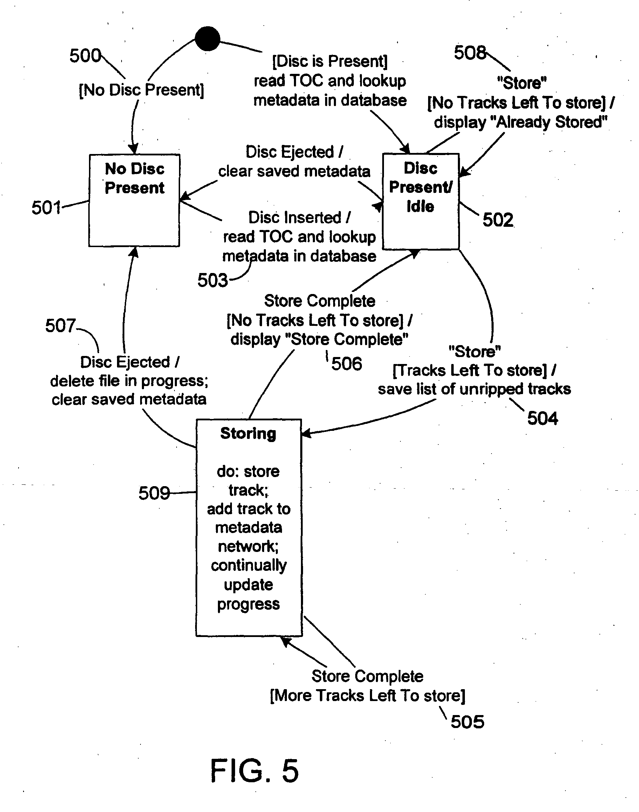

Automatic selection mode, tracks mode, bins mode, virtual CD changer mode, and search mode all require track data to have been stored onto the system's hard disk. This is done by the ripper module, which operates as depicted in figure 5.

When no disc is inserted (and no other source is operating) 500, the module is in the "No disc present" state 501. When a disc is inserted (or the user begins to play from another source, e.g., radio or cassette tape) 503, the system reads the Table of Contents (TOC) data, if available (see "Data storage," below) and enters the "Disc present/idle" state 502. When the user presses a store button, if there are still tracks left to store 504, the system saves the list of unstored tracks and enters the "Storing" state 509. If there are no tracks left to store 508, the system displays an error message.

In the storing state, while other modules handle playing the source, the tracks are simultaneously recorded to the hard drive. When storage of all tracks is completed, the module may display a confirmation message to a user 506 and return to idle state 502, or alternatively it may return to the other source mode and begin to play the source from the start. If the source is removed before all tracks have been stored 507, the system returns to the no disc present state 501. If the source is removed, the user presses stop, the user changes sources, the system runs out of hard disk space, or some other event occurs rendering it impossible for the system to continue storing the current track, the stored data for the current track is deleted.

In other examples, the tracks would not have to be played while being stored onto the unit's hard drive. Track storage could then be completed in a shorter time. The store module operates independently in these embodiments, and the user may continue to listen to any track from any source, including the system's hard disk, while the store module is storing tracks.

Other embodiments permit "background storing." This feature would permit the user to indicate that a given track should be stored. The system would defer the actual storage until a later time, when the system is not in use. If the user engages the system while it is storing a track in the background, the system aborts the storage function. If the user plays a track from a CD that is queued for background storage, the track may be stored when the user plays it.

Background storage might be combined with the standard storing feature as follows. Standard storing could normally be used; but if the system runs out of hard disk space, the user removes the CD, or some other event occurs rendering storage of the track impossible, the system could queue the track for background storage, and store it when it later becomes possible.

Some embodiments perform a minimal amount of processing at storage time, and defer advanced processing until the system is idle. In these embodiments, the amount of time during which the original medium is needed is reduced, with most of the signal processing taking place at idle time.

Metadata

By metadata we mean information about tracks other than the underlying track data itself. There are many examples of potential metadata sources, and types of hierarchies. For instance, if the stored tracks are musical in nature, the system could utilize a digital signal processing algorithm to analyze, for instance, the amount of bass in a particular track. It could then assign the track to a category such as "Heavy bass," "Little bass," or something in between. Alternatively, if the tracks represent non-musical data, metadata appropriate for that type of data would be used. For instance, if tracks represent commands in computer programs, appropriate metadata categories might be "Scope" (e.g., document-level commands, global commands, or selection-level commands); "Type" (e.g., font, style, preferences, layout); menu (e.g., File, Edit, View); and command name (e.g., Insert Page). As with music data, this metadata could be prepackaged with the software, or could be available separately, for instance, through the Internet. In the sections that follow, the example of stored music will be used. The description that follows demonstrates the creation of a stored tracks graph suited for representation of characteristics peculiar to musical data, such as artist, genre and style. In other examples, depending on the type of data being stored, different structures with different relationships among the nodes would be used.

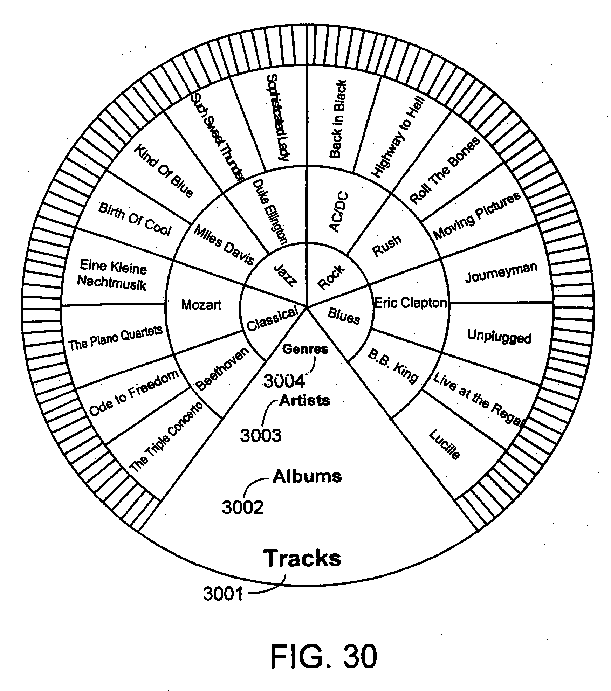

Returning to the music example, the metadata takes a structure such as the one depicted in figure 30. Individual tracks 3001 together make up an album 3002; multiple albums make up the works of an artist 3003; and multiple artists together form a genre 3004. Many implementations will add additional layers, as described below.

The automatic selection mode may take advantage of, for example, any of the following three levels of metadata support:

(1) No metadata at all.

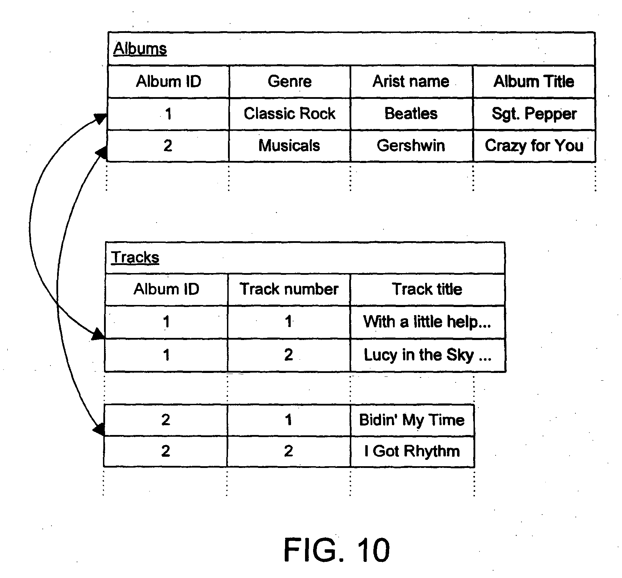

(2) An externally supplied database of metadata, indexed by a unique album identifier, potentially containing the following columns: "Genre," "Artist name," "Album Title" and a list of "Track Titles" ordered by "Track Number". One source of such data is Gracenote's CDDB database; we will refer generically to any data with these fields as "CDDB Data." See figure 10.

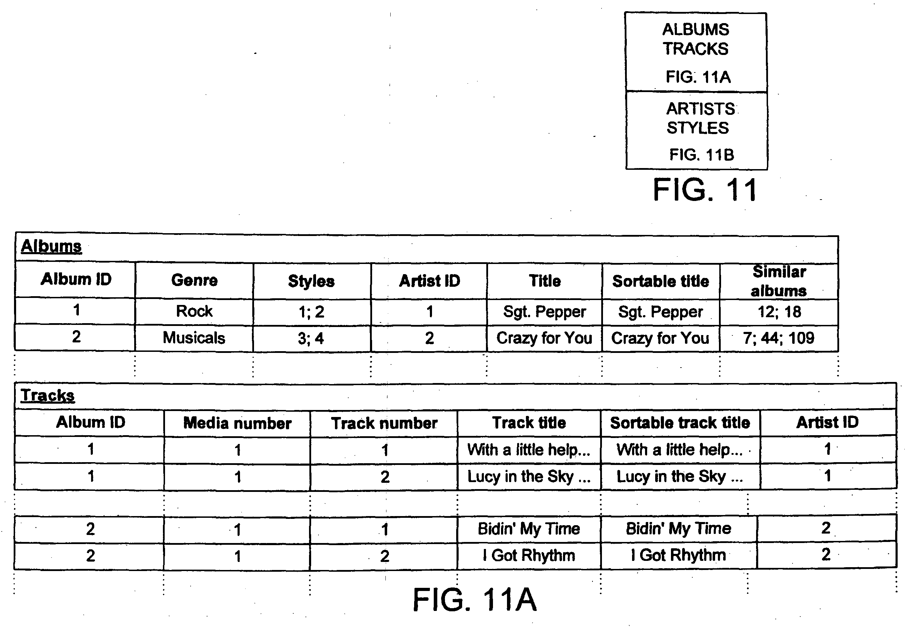

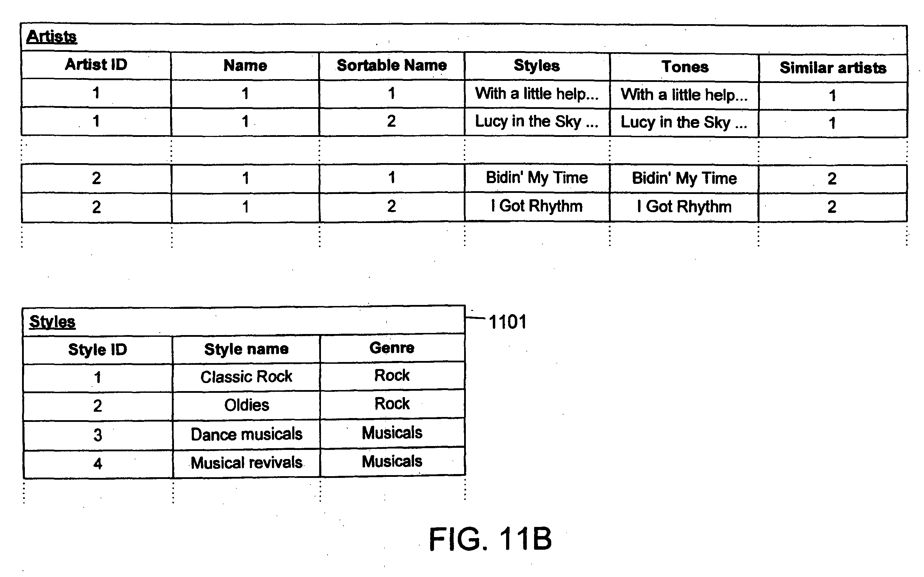

(3) An externally supplied database, including an album table, indexed by a unique album identifier, potentially containing columns for "Genre," a list of "Styles", a unique artist identifier, "Album Title", "Sortable Album Title", and a list of "Similar" albums (referenced by their unique ids). The database also includes an artist table, indexed by a unique artist identifier, and columns for "Artist Name," "Sortable Artist Name," a list of "Styles", and a list of "Similar" artists (referenced by their unique ids). The database also includes a static "Style" table, where each style is linked to a "Genre." The database also includes a "Track" table, indexed by unique album identifier, with columns for "media index" (the sequential disc number in a multi-disc set), "Track Number", "Track Title", "Sortable Track Title", "Artist Unique ID". One source of such data is the All-Music Guide. We will refer generically to data with these fields as "AMG Data." See figure 11.

Other examples of selection systems would be capable of working with any metadata format which can be converted into the selection system's internal graph format. The system's "stored tracks graph" is a graph with nodes at different levels of generality. Nodes may be connected by ancestor-descendant relationships, or by cousin-cousin relationships, as depicted in figure 8. The levels of generality, and thus all ancestor-descendant relationships, are transitive.

The data structure for the system's stored tracks graph is summarized in figure 12. Each item of metadata forms a node in a semi-hierarchical network. There are a number of different types of nodes described in the figure, each of which derives from a generic node object. The node object 1209 (and thus every node) contains fields for a "name" (which is used when something must be displayed to the user), an "id" (a unique identifier), a "sortname" (a sortable version of "name"), and a set of feedback records 1214. The feedback records consist of an array of records 1213, one for each user station, plus one maintained globally, that keep track of all feedback, score, and play-history information.

The hierarchy is represented by the vertical dimension and the inter-node connections in the figure. A connection from node A at one level to node B at a higher level (i.e., an ancestor-descendant relationship) implies that the entity represented by node A is part of or was performed by the entity represented by node B.

Reading upward from the bottom of the figure, a track node 1201 contains the standard node fields, and additionally contains fields for trackNumber (its position on the CD), its artist and genre (when there is metadata available), and its duration. Each track node is connected 1222 to a single CD node 1202, and tracks from multi-artist CDs are connected 1225 to one or more artist nodes 1204 (when this metadata is available).

A CD node 1202 stores the disc's Table of Contents (TOC) string, and an ordinal media index" (when available) representing the disc number in a multi-disc set. Each CD node is connected 1223 to a single Album node 1203.

An Album node 1203 represents either a single CD or a multi-disc set. If the album contains tracks from a single artist, it is connected 1224 to a single artist node 1204; if it contains tracks from multiple artists, it is not connected to any artist nodes. Instead, the track nodes 1201 are connected 1225 directly to the artist nodes 1204. An album node may be connected 1227 to zero or more style nodes 1206. An album node may also be connected 1221 to zero or more "Similar" Albums by cousin-cousin links.

An artist node 1204 represents a single performer where a performer is defined as one or more individuals who recorded one or more of the tracks. It may be connected 1226 to zero or more style nodes 1206. An artist node may also be connected 1229 to zero or more "Related" artists by cousin-cousin links.

A style node 1206 represents a sub-genre of music. It is connected 1205 to at least one genre node 1207. When the metadata does not provide both style and genre information, the genre may be determined from the style by means of a static look-up table (see 1101, figure 11). For instance, style "Classic Rock" maps to genre "Rock".

A genre node 1207 corresponds to a broad class of music (e.g., "Rock", "Classical", "Jazz"). It is connected 1228 to the root node (the "Everything" node)1208.

The root node 1208 is an ancestor of all other nodes. It represents the entire music collection.

Connections between nodes are represented by data structure 1229. Connections are two-way (and thus contain a parent or left cousin 1230 and a child or right cousin 1231), and each connection has a numeric weight ("link weight") 1232 that representing the strength of the relationship and a type 1233 that specifies the nature of the relationship. The link weights may be derived from the external metadata information, they may be static, or they may be all equal to 1.

In the case in which no explicit metadata is available, the system has no direct way to classify the tracks. For instance, when a new musical CD is purchased and loaded into the system, although the system would know the relationships among the tracks on the CD, it would not know each track's genre or style. It would thus be unable to create nodes in appropriate locations in the stored track graph. Some implementations address this concern by prompting the user (using speech synthesis, for example) for information that is needed and then using the results to build the metadata into the system. For example, the system could ask "What genre would you say this is?" The spoken result, "Jazz," could be recognized and stored.

Types of user feedback

There are five events that the selection system uses to learn from the user and to determine user preferences (although five events are described, other kinds of events are also possible):

(1) The user presses a button or in some other way indicates an explicitly positive reaction at some level (for example, "Rate +");
(2) The user presses a button or in some other way indicates an explicitly negative reaction at some level ("Rate -");
(3) The user presses a button or in some other way indicates that the system should skip to the next track or otherwise terminate the current track, provided, for example, that the button press occurred within a certain pre-specified time period after the track has begun playing (e.g., greater than two seconds and less than two minutes) ("Next track");
(4) An item plays from start to finish, provided that there has also been some type of user interaction within a set time period, e.g., one hour centered on the time when the track began, indicating that the user likely listened to the track and allowed it to complete deliberately ("track completes successfully");
(5) The user increases the volume ("Volume +").

The first two items are explicit acts of the user to tell the system something about his preferences. The remaining items represent only implicit information about the user's preferences. Other kinds of feedback about preferences, both explicit and implicit, could be used.

Scoring a node

In the item selection system, nodes of the stored tracks graph are assigned scores based on feedback from the user. Because of the connections between the nodes in the graph, feedback applied to one node (e.g., a user response to a track) potentially affects all nodes in the graph. Thus, the system may make deductions about the user's responses to each stored track, on the basis of the user's response to just one. Furthermore, the system may keep track of short-term and long-term preferences. This feature allows the system to quickly adjust to a user's changes in mood, without losing information about the user's general long-term track preferences.

Figure 31 shows two track score distributions, representing the initial distribution of scores among tracks, before any feedback is received, and one example of a desired final distribution. Initially 3106, the system has received no user feedback; thus the user is presumed to be neutral 3103 to every track. As more explicit and implicit feedback is received, the system makes deductions regarding tracks that are similar to the ones for which explicit feedback has been received. Eventually, one goal of the system may be to achieve a double-bell-curve distribution 3107. The user will have given feedback, either explicitly positive 3101 or negative 3105, or implicitly positive 3102 or negative 3104, regarding a few tracks. With that information, the system will deduce the user's preferences, assigning positive or negative scores to the remainder of the tracks based on the unrated tracks' relationships with the rated tracks.

As previously discussed, the selection system maintains a graph representing every track, metadata regarding that track, and the relationship between that and other tracks. As will be described in more detail, the system takes advantage of this graph structure in order to propagate feedback to nodes other than the track currently being played. Additionally, as described more fully below, the nodes may optionally track long-term preferences separately from short-term preferences.

Long term preferences may be tracked as follows, although the numerical weights are provided merely as one possible example (see figure 13):

(1) When the user presses the plus button 1306, the system sends 1301 a +1 feedback event to the track node 1311.

(2) When the user presses the minus button 1307, the system sends 1302 a -1 feedback event to the track node.

(3) When the user presses the next track button 1308, the system sends 1303 a -1/3 feedback event to the track node.

(4) When a track completes successfully 1310, the system sends 1305 a +1/3 feedback event to the track node.

(5) When the user presses the increase-volume button 1309, the system optionally sends 1304 a +1/6 feedback event to the track node.

These feedback events modify the *accumulatedScore* 1210 and *accumulatedWeight* 1211 variables of the track node,1201 and of all of its ancestors in the metadata network. *accumulatedScore* is equal to the sum of all feedback for that node (positive and negative), and *accumulatedWeight* is equal to the sum of the absolute values of each feedback event for that node. Thus, the ratio *accumulatedScorelaccumulatedWeight* is always in the range [-1,+1]. This ratio is called the *local score.* If the local score is +1, that means all feedback received has been positive. If the local score is -1, that means that all feedback received has been negative. If *accumulatedWeight* is 0, the local score is defined to be 0.

In some examples, *accumulatedweight* and *accumulatedScore* are bounded. If *accumulatedWeight* exceeds a fixed boundary value, both variables are multiplied by the ratio *fixedBoundaryValuelaccumulatedWeight*, thereby preserving the ratio between the variables while keeping them within the specified bounds.

Short-term mood-based preferences may be handled similarly. For example, if the user normally enjoys rock music, but currently wishes to hear classical music, the system is able to receive his short-term preferences, and adjust, without substantially modifying the long-term preferences. Thus, in this example, the system would quickly interpret the user's feedback to mean that he wants to hear classical music at the moment; but when turned on at a later time, the system will remember that the user mostly enjoys rock.

For this purpose, instead of affecting *accumulatedScore* and *accumulatedweight*, the affected variable will be *moodBonusScore* 1212. In this configuration, when a feedback event is about to be processed, all *moodBonusScore* variables across all nodes will be reduced toward zero (e.g., by multiplying each value by a fraction such as 0.9). Then, the system will adjust the *moodBonusScore* for the track receiving feedback and each of its ancestors, for instance, by adding +0.1 for positive feedback, or -0.1 for negative feedback. The *moodBonusScore* may be bounded; in the example above, it is guaranteed to be in the range [-1,+1].

A system that maintains both long-term and short-term preference data could function as follows:

(1) A "Rate +" event will make a large positive change to the *moodBonusScore* variable and a small positive change to accumulated variables.

(2) A "Rate -" event will make a large negative change to the *moodBonusScore* variable and a small negative change to accumulated variables.

(3) A "Next track" event will make a small negative change to the *moodBonusScore* variable, and a small negative change to the accumulated variable.

(4) A "track Completes Successfully" event will make a small positive change to the *moodBonusScore* variables and a small positive change to the accumulated variables.

(5) A "Volume +" event makes a small positive change to the *moodBonusScore* and a small positive change to the accumulated variables.

Thus, the accumulated variables have infinite memory, and the *moodBonusScore* variables have limited memory (because they decay toward zero).

Furthermore, in some examples, the system permits seeding of scores from the search screen (see "Modes of operation"). That is, the user may locate a track on the search screen, and press one of the explicit rating buttons to apply the feedback to the node and its parents.

In some implementations, pressing the "Rate -" button causes the current track to stop playing and the next track to begin. To the user, this has the same effect as pressing the "Next track" button, but it has a stronger effect on the immediate behavior of the system.

In other implementations, in addition to causing the current track to skip as above, there is a short pause before each new track is played. The name of the track to be played appears on the on-screen display. The user may press "Rate -" before the track plays to immediately skip to the next track. In this case, the user provides explicit feedback without the track ever having been played.

Each node in the graph maintains its own score-related data. Each node contains a set of feedback records 1214 (see figure 12). This set includes one group of variables for each preset, plus an additional global group. Each group contains three numeric variables: *accumulatedScore*, *accumulatedWeight*, and *moodBonusScore*.

Each track, CD, and artist node also has a single integer-valued variable *lastPlayedAtIndex*. If *lastPlayedAtIndex* holds the value -1, the track represented by that node has never been played by the system. The system keeps a global circular play counter that starts at zero, increments each time a track is played, and returns to zero when it attains a specified value, e.g., 1024. When a track is played, all nodes whose *lastPlayedAtIndex* variable is equal to the global counter value are reset to "-1". For instance, if the fifth track the system played was X, and the system is now playing the 1,029th track, then the global counter value would now be 5 (1029 mod 1024 = 5), and thus track X's *lastPlayedAtIndex*, now 5, would be reset to -1. Thus, the system "forgets" that this track was played. Then, the values of *lastPlayedAtIndex* for the current track, CD, and artist nodes are set to the current value of the global counter. At this point, the expression *(globalCounter-lastPlayedAtIndex) mod 1024* represents how recently a track, CD, or artist has been played, provided that *lastPlayedAtIndex* is greater than -1.

The system also maintains a first-in, first-out list (see figure 14) representing the most recently played tracks for each preset. This play history is only used when the user uses the transport controls to go backward and forward within the play history. Thus, if the system is currently playing track 1402, and the user presses the previous track button, the system plays track 1401. The next track it will play will be track 1402. When the system completes playing track 1402, a new track will be chosen and added to the end of the list 1404, and track 1403, the oldest track, will be removed from the list.

If the user presses previous or next track, and the track that would otherwise be played has been deleted from the hard disk, the system skips that track and plays the track immediately preceding it or following it in the list.

Data storage format

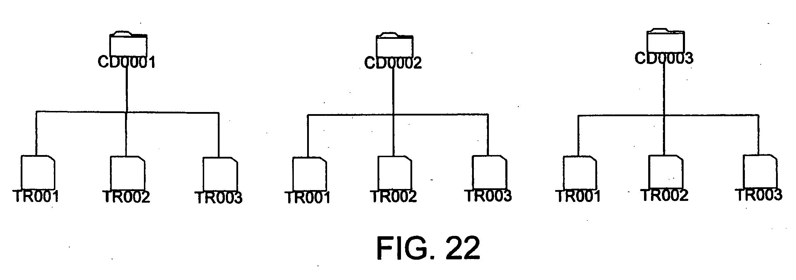

Tracks are recorded from a CD onto a hard disk or other random access storage medium. When tracks represent musical data, each track is stored on the medium as a separate file, potentially compressed in MPEG-1 layer 3 format ("MP3"; a standard defined by the Moving Picture Expert Group), AAC format (Advanced Audio Coding, also defined as part of the Moving Picture Expert Group standards), or other suitable format. Along with each track, table of contents information is stored, if available on the original medium. The index of the tracks on the CD is also stored. The specific format on the new medium is not relevant, so long as the track number and table of contents are available. In some embodiments, separate directories for each album are created (see figure 22). These directories are numbered sequentially, e.g., CD0001, CD0002, etc. Within a directory, track files are sequentially numbered (TR001, TR002, etc.). The table of contents may be stored, for example, as a string in the ID3 header of each MP3 file.

When a track is stored on the hard drive, nodes are added to the stored track graph. As noted earlier, the selection system may obtain metadata from multiple sources for the purpose of building the graph. In some cases, where track data is musical, it searches for data provided by the All Media Guide company (AMG) and data provided by Gracenote's CDDB service. First, the system searches the stored track graph for a CD node whose TOC matches the table of contents of the current CD. If the CD is not present, the system queries the AMG database, using the CD's table of contents as an index. If the AMG database returns a match, the system adds a CD node, and an Album node if it does not already exist, using data from the AMG database. Note that whenever a new node is created, all of its variables are set to zero. The track node is created and added to the network under the newly-added CD node. The system uses the list of similar albums in the AMG database to connect the Album node to other albums in the network. The track node is connected to the Album node. The Album node is connected to the appropriate style nodes, which are created if they do not already exist.

If this is a single artist CD, and the Album node did not previously exist, or if this is a various-artists CD, then the system creates an artist node, if one does not already exist. The artist node is connected to the Album node if this is not a various-artists CD. If the artist node did not previously exist, it is connected to the style nodes specified in the artist's entry in the artist table of the AMG database. If this is a various-artists CD, the system connects the artist node directly to the track node; otherwise, it is connected to the Album node.

Any style nodes that did not previously exist are connected to the appropriate genre nodes (which are created as needed), and any new genre nodes are connected to the root node.

If no metadata was returned, the system may query the CDDB database. If there is a match, the nodes are created as described for the AMG database. If there is still no match, then track and CD nodes are created, along with dummy "Unknown" nodes at the Album, artist, and style levels.

Alternatively, the CDDB database may be queried first. If a match is found, the AMG database is queried second, and the more detailed information from the AMG database, if available, is used to supplement the CDDB data.

As noted earlier, CDDB and AMG data are only two possible types of metadata, and are particularly suited to musical tracks. When other types of data are used, other hierarchies with different levels would be created to map the information made available by metadata appropriate for the data. For instance, where the database consists of issued patents, if the metadata provided is field, inventor, prior art cited, and patent name, a stored tracks graph would be created mapping these metadata fields to the structure described above.

Propagating feedback

User feedback may be applied to a given node as follows. The system calls a function, *insertFeedbackAtNode*, passing it the *node* to apply feedback to (i.e., the track node that is being played); the integer preset number, the *moodBonus* (representing the change in short-term score), and the floating point *rawScore* and *weight* deltas (representing the change in long-term feedback). First the selected node is initialized:

> *node.currentFeedbackFlag* 1218 = 1
> *node.currentFeedbackRawScore* 1216 = *rawScore*
> *node.currentFeedbackWeight* 1217 = *weight*
> *node.currentMoodBonus* 1219 = *moodBonus*

Next, the system traverses the graph, ensuring that all nodes of a lower level are visited before any higher nodes are. As each node is visited, if the node's *currentFeedbackFlag* is set, each of the node's cousin links is considered. Temporary variables *tbonus, tweight* and *trawScore* are initialized:

> tweight = node.currentFeedbackWeight*link.weight *COUSIN_PENALTY
> trawScore = node.currentFeedbackRawScore * link.weight * COUSIN_PENALTY * MAX_IMPLICIT_CONTRIBUTION
> tbonus = node.currentMoodBonus * link.weight * COUSIN_PENALTY

and if the cousin node's *currentFeedbackFlag* is not set and *tweight* is larger than the cousin node's value for *currentFeedbackWeight*, the cousin node's values for *currentFeedbackRawScore* and *currentFeedbackWeight* are set to *trawScore* and *tweight* respectively. In one example, COUSIN_PENALTY is set to 0.4 and MAX_IMPLICIT_CONTRIBUTION is set to 0.8. If the absolute value of cousin node's *currentMoodBonus* is less than the absolute value of *tbonus,* the cousin node's *currentMoodBonus* is set equal to *tbonus*.

Next, still assuming that the current node's *currentFeedbackFlag* is set, each of the node's parent links is considered in turn. Temporary variables *tbonus*, *tweight* and *trawScore* are initialized:

> tbonus = node.currentMoodBonus*link.weight
> tweight = node.currentFeedbackWeight*link.weight
> trawScore = node.currentFeedbackRawScore*link.weight

If the parent node's value of *currentFeedbackWeight* is less than *tweight,* then the parent's *currentFeedbackFlag* is set to 1, and its values of *currentFeedbackRawScore* and *currentFeedbackWeight* are set to *trawScore* and *tweight* respectively. If the absolute value of the parent node's *currentMoodBonus* is less than the absolute value of *tbonus*, it is set equal to *tbonus.*

The system repeats this process with the current node's parents.

After all of the nodes have been visited, they are visited again in reverse order (starting with the Everything node, and working down to the track nodes). As each node is visited a second time, if *currentFeedbackWeight* is non-zero, the node's feedback variables (for the specified Preset) are adjusted as follows:

> accumulatedRawScore += currentFeedbackRawScore
> accumulatedWeight += currentFeedbackWeight

Each node type may have a weight limit. Although other weights are possible, one example follows:

> FeedbackLimit = [ 4.0, # track
>                   10.0, # CD
>                   10.0, # album
>                   20.0, # artist
>                   40.0, # style
>                   60.0, # genre
>                   100.0]#all

If *accumulatedWeight* is now larger than the limit for that kind of node, the *accumulatedWeight* is set to be equal to the limit. If the absolute value of the *accumulatedRawScore* is now larger than the limit, as defined above, for that kind of node, it is normalized to be equal to the limit.

Also, the node's *moodBonusScore* (for the specified preset) is multiplied by (1-*moodBonus*) and then the value of *currentMoodBonus* is added to it. Finally, the values of *currentFeedbackFlag, currentFeedbackRawScore*, and *currentFeedbackWeight* are all zeroed. At this point, the system has propagated feedback to all ancestors and first cousins of ancestors of the selected node.

In one example, the *insertFeedbackAtNode* function is called with only one of four possible combinations of *rawScore*, *weight*, and *moodBonus*:

1. If the "Rate +" button is pressed, *rawScore* = 1.0 and *weight* = 1.0, and *moodbonus* = 0.1.

2. If the "Rate -" button is pressed, *rawScore* = -1.0 and *weight* = 1.0 and *moodBonus* = 0.1.

3. If the "Next track" button is pressed in the appropriate time window, *rawScore* = - MAX_IMPLICIT_CONTRIBUTION*IMPLICIT_PENALTY and *weight* = IMPLICIT_PENALTY, and *moodBonus* = 0.05.

4. If the track plays to completion, *rawScore* = MAX_IMPLICIT_CONTRIBUTION*IMPLICIT_PENALTY and *weight* = IMPLICIT_PENALTY, and *moodBonus* = 0.05.

In one embodiment, the constants may be set as follows: MAX_IMPLICIT_CONTRIBUTION = 0.8 and IMPLICIT_PENALTY = 0.33.

Once the feedback has propagated through the graph, it is still necessary to calculate a node's score, taking into account both short-term and long-term preferences. This involves another top-down traversal of the graph, although this step could be combined with the previous traversal. Starting with the Everything node and working down, first, the system zeros the node's variables *rawScore* 1216 and *weight* 1217. For each parent of the current node (if any), add to *rawScore* the parent node's *rawscore* in that preset (multiplied by the link weight), and add to *weight* the parent node's *weight* in that preset, multiplied by the link weight. After adding in all parent feedback, multiply both *rawScore* and *weight* by PARENT_PENALTY. In an example implementation, PARENT_PENALTY may have the value 0.2. Next, the system adds the node's current Preset values of *accumulatedRawScore* into *rawScore* and the value of *accumulatedweight* into *weight.*

The system maintains a list of constants, called MOOD_WEIGHTS[GRAPH_LEVELS]; there is one mood weight constant per level of hierarchy in the graph. In one implementation, each MOOD_WEIGHT is zero, with the following exceptions: The MOOD_WEIGHT for the CD level is 1; the MOOD_WEIGHT for the artist level is 1; and the MOOD_WEIGHT for the style level is 2.

The selection system multiplies *moodBonusScore* for the current node by the mood weight for the node's level, and adds this value to *rawScore.* The system then adds the current level's mood weight into *weight.* The system then repeats this process for each of the current node's children.

The ratio *rawScore/weight* is defined as the node's score in the specified preset, unless the weight is zero, in which case the score is defined to be zero. Note that a node's score depends on the score ratios of all of its ancestors in the network. Since all nodes are descended from the Everything node, this implies that every feedback event affects the scores of all nodes.

Selecting the next track

When the system is in "automatic selection" mode, it chooses the next track to play based on each node's scores, combined with the current risk tolerance, and a number of other variables. Thus, in some examples, the track selected to be played may not be the highest-rated track. Every track, even the one with the lowest score, has some probability of being played in each selection cycle, with the exact probability depending on the system's current risk tolerance. The risk tolerance variable attempts to prevent the system from making two mistakes in a row, while achieving a degree of variation that would not be possible if the system merely played the highest-rated track. If the system receives negative feedback, it becomes more conservative to avoid the possibility of a repeat mistake. As it receives positive feedback, it becomes progressively less conservative.

In some embodiments, the selection process proceeds as follows. First, the system counts the numbers of artist, CD, and track nodes that have scores greater than a constant threshold. In one implementation, the threshold is 0.2. As a result, the system knows how many artists, CDs, and tracks the user "likes." These counts are assigned to variables *artistCount, CDCount*, *and trackCount,* respectively.

Each preset has a *conservatismThrottle* variable 1215 that determines how much risk the system is willing to take in selecting a track that has a relatively lower score. The *conservatismThrottle* is bounded, for instance to the range [0.5, 7.5], and is adjusted whenever certain feedback events occur. If any of these adjustments would cause the throttle to exceed its threshold, it is set to the maximum or minimum value, as appropriate.

(1) When the "Rate -" key is pressed, the throttle is multiplied by 10.0 which has the effect of reducing the risk to be taken in selecting the next track and reflects the notion that it is desirable not to take too great a risk in a context in which the user is already at least mildly dissatisfied.

(2) When the "Next track" button is pressed in the appropriate window, the throttle is multiplied by 1.5 which reduces the risk to be taken but not by nearly as much as when the rate - key is pressed.

(3) When a track completes successively, it is multiplied by 0.9, thus increasing the risk to be taken in light of the success of the prior track selection.

(4) Finally, when the system selects a track whose score is less than a constant threshold (e.g., 0.2), the throttle is multiplied by 1.5 which increases the risk to be taken by a larger amount.

Note that "Rate +" and "Volume +" do not affect the throttle.

To choose a track for playback, a temporary variable, *totalLikelihood* is zeroed. Then, each track node is visited, in arbitrary order. A variable *score* is set to its *rawScore/weight*, as described previously. Then, if the track's *lastPlayedAtIndex* is not equal to -1, it is converted into a distance, as follows (where the percent symbol indicates a modulus operation):

$$distance = (globalPlayIndex - lastPlayedAtIndex)\ \%\ 1024$$

If the distance is less than the track count (calculated above), then a penalty is applied to the *score*:

$$score\ \text{-=}\ 2.0*(1.0 - trackDistance / trackCount)$$

Similarly, the track's CD node and artist node are examined, and if their distances are less than the CD count and artist count respectively, further penalties are applied:

$$score\ \text{-=}\ 0.6*(1.0 - CDDistance/CDCount)$$

$$score\ \text{-=}\ 0.4*(1.0 - artistDistance/artistCount)$$

At this point, *score* for a given node represents the average feedback it has received, penalized if the track, CD or artist has been recently played. Now, *score* is converted into a likelihood value by the following, where pow(x, y) raises x to the y power:

$$likelihood = pow(10.0, score * conservatismThrottle)$$

The exact form of this function does not matter, but the ratio of two likelihoods for two different scores L1/L2, where Score1>Score2, should increase for larger values of conservatismThrottle, and decrease for smaller values, i.e., the function exhibits expansive nonlinearity. Next, *likelihood* is added into a local variable *totalLikelihood*, and a random number in the range [0,1) is generated. If the random number multiplied by *totalLikelihood* is less than *partialLikelihood*, the track being considered is tracked in local variable *currenfBestChoice*.

This process is repeated for each track. At the end of the process, the system selects the track represented by *currentBestChoice* to play. It is guaranteed that a track will be selected, and the probability of each track being chosen is equal to its *likelihood* value divided by the sum of the *likelihood* values of all the track nodes.

Other features

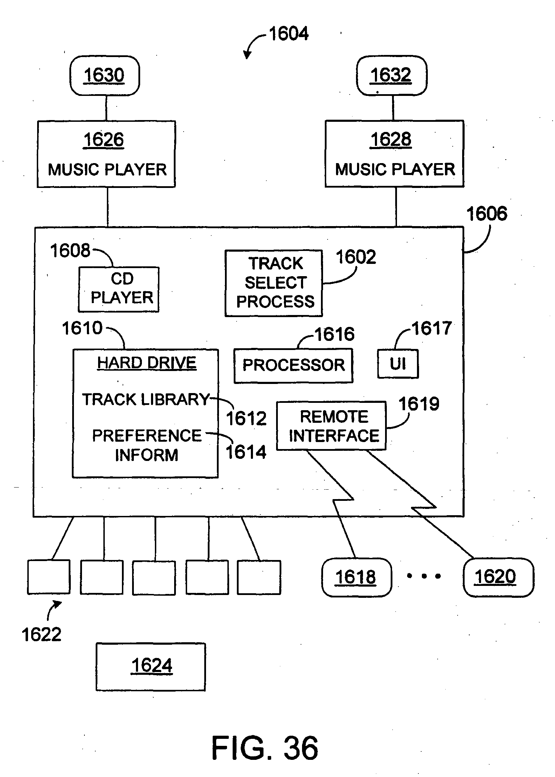

As shown in figure 36, in some implementations, a track selection process 1602 is part of a music system 1604, for example a music system serving one or more rooms or zones of a house. A main console 1606 includes a CD or DVD player 1608, a hard drive 1610 (which stores a track library 1612 and preference information 1614), a processor 1616 , a user interface 1617, and an interface 1619 for one or more remote controllers 1618, 1620. Five sets of satellite speakers 1622 (for surround sound) and a bass module 1624 are connected to the main console. The main console provides a stream of audio material to the speakers. The music system can be supplemented by additional music players 1626, 1628 that are compatible with the control protocols of the main console. By music players here we mean audio reproduction systems that could be remotely located to reproduce or render audio streams provided, for example, from the main console. Some of the additional music players may also be operated as stand-alone devices. Using additional players enables multiple rooms or zones to be served by a single music system. The additional music players may also interact with remote devices 1630, 1632. When additional players are installed, the main console may provide additional streams of audio material to those devices.

The track selection process 1602 bases its selections at least partly on the stored preference information 1614 just as the other track selection processes described elsewhere in this document base their selections at least partly on the various kinds of preference information also described elsewhere in this document. The preference information may be derived from one or more (of even a large number) of users through one or more (or even a large number) of user interfaces located anywhere and communicating in any of many different ways. The track selection process may generate multiple play lists of audio material at one time using different portions or aspects of the stored preference information and the multiple play lists are rendered into audio streams by the console. For example, the preference information may include preferences associated with different users or preferences associated with different moods of a single user, or preference information associated with groups of users. When the track selection process is performed for a stream, the selection can be based on a selected one of those aspects of the preference information. Many other examples of aspects or portions of the preference information may also be used.

The different streams may be generated for performance at the same time using audio material stored on the single hard drive or other medium. The different streams may be generated respectively by multiple instances of the track selection process that may run simultaneously. However, all of the instances may use a single network of nodes of track information about the tracks in the library, so that the nodes do not have to be duplicated. As explained in detail earlier, nodes, in some examples, may be data items that are organized in a graph called a stored tracks graph.

The preference information on which the track selection process bases its selection has usually been previously stored and processed. While the resulting stream is being performed, additional preference information may be received. In some examples, the track selection occurs independently of the incoming preference information.

In some implementations, while tracks are being performed at two different locations (for example, a kitchen and a bedroom of a house, or an airport waiting room and a doctor's office, in another example), preferences of one or more users at the two different locations may be received from sources capable of capturing preference information (for example, user interfaces of hand-held devices) at the two different locations. Works to be performed may be selected based on the preference information received from both of the sources. For example, the preference information received from both sources may be composited.

The preference information from the two (or more) different sources may be provided by a single user. For example, a person could enter preference information at one time and location into a user interface of one device, and could enter other preference information at another time and location into a user interface of another device. Both sets of information could then be treated as having come from one source. Or the identity of the location of the source and the time of entry of the preference information could be taken into account in using or combining the preference information for a user. More generally, preference information for a single user can be obtained from user interaction with different devices located in different places, at different times, using the same or different associated collections of works. To associate the various preference information may require that the user be identified in some way, or provides his previously stored preference information to any system he interacts with to permit the information to be updated.

The preference information from the two (or more) different sources may be provided by different users and combined to form preference information applicable to a group that includes those users and possibly other users. For example, two different members of a family may enter preference information at different times and places and the preference information may be combined for later use in selecting tracks to be played to either or both of those family members and to other family members.

On the other hand, preference information from different sources, different users, different locations, or different times (or any combination of the those factors) may be stored independently and used independently to control the selection of tracks for performance for different users and groups of users.

Collections

Users of a preference indication and track selection system may often own or control collections of digital works to be performed. For example, a user may own a collection of CDs containing music tracks or may have acquired and stored tracks on a hard disk or other storage medium of a computer or a music player (e.g., an MP-3 player) or other portable device. In some implementations a collection may be thought of as a set of music tracks, usually stored on a single medium (or set of media) and that are available as a group for use by an instance of a track selection process that is being run. Preference information may be provided by the user with respect to tracks in his collection (for example, when tracks are being performed). It is also possible for the user to indicate preference information with respect to the performance of tracks that are not within his collection and then to have the preference information alone (or in combination with other preference information) used as the basis for selecting tracks for performance to him. Thus, preference data associated with user interaction with one collection can be applied to use of a different collection, and preference information representing interaction with a collection not controlled by a user, may be applied to a collection that is controlled by the user.

For the purpose of applying preferences generated in interaction of a user with one collection, to a different collection, all of the necessary data is captured in the preference data for the tracks themselves. For example, a summary may be kept of all past preference information for every track that has ever been played. To apply this data to a different network of nodes (for example representing music in a collection that is available to play at a later time), a parallel network of nodes is generated from the preference data, including all the artist, style, etc. data. The preference feedback is then re-propagated through the network, so that all nodes in the parallel network have up-to-date feedback. Then corresponding nodes are identified between the two networks. For example, if track A is in the preference network, but not in the current collection, at least some of its ancestors--e.g., an artist or style--will be present. Those preference values are copied to the network that represents the collection of available music.

Querying of database

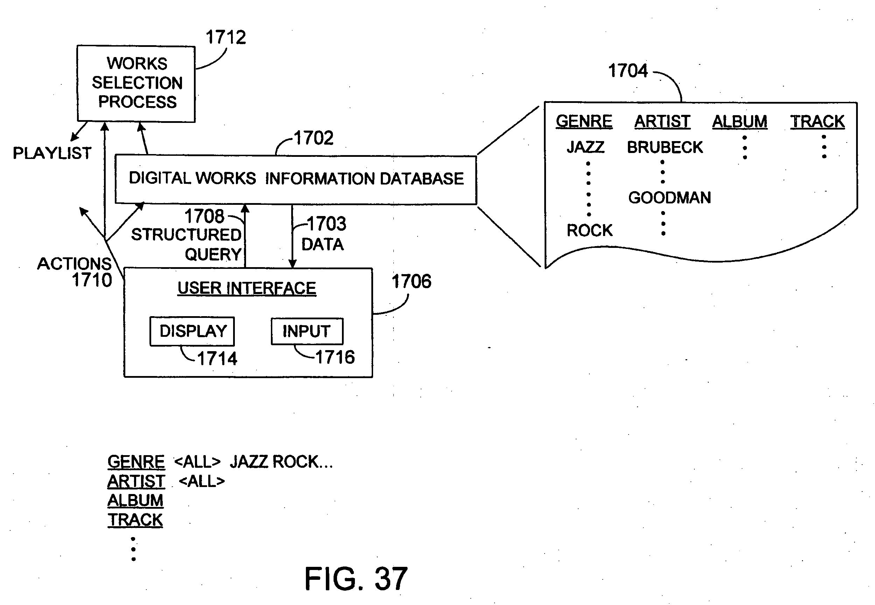

As shown in figure 37, information about digital works that may be performed may be stored in a digital works database 1702, as previously discussed. Each of the records 1704 of the database may contain classification and other information (for example, preference scoring) about a single work (or even a portion of a single work) or about groups of works. The classification categories for the works may range from broader (more inclusive) to narrower. In the example shown in figure 37, which relates to music tracks, the classification categories include genre, artist, album, and track.

Note that the categories are not strictly hierarchical, that is tracks of a certain artist (a narrower category) do not all necessarily fall within a single genre (a broader category). It is useful for a user to be able to interact with the database 1702. The user may then be able to search for and see information about tracks that are described in the database and also be able to add or change information about the tracks (for example, add or change preference information about one or more tracks) or to take one or more of a variety of actions with respect to the tracks (for example, remove one or a set of tracks from the database, or have a selected group of tracks played, to name just two).

A user interface 1706 is provided to enable the user to define structured queries 1708 to the database, to receive resulting data 1709 back from the database, and to indicate actions to be taken 1710. The user interface may be part of any sort of electronic device including a music system, a computer, a handheld device, a remote controller, a kiosk, a mobile telephone, or a personal digital assistant, for example. The database may be located in a variety of electronic devices (including those mentioned with respect to the user interface) and may be distributed among such devices. The querying of the database using the information entered by the user may be done at the user interface device or at a remote device.

A works selection process 1712 uses information in the database to produce playlists, for example.

The user interface includes a display 1714 (or other output device) to provide information to the user about the contents of the database and an input device 1716 to receive information from the user, including information about structured queries to be delivered to the database and preferences with respect to one or more tracks. For use on small portable devices the input and output devices are small and may have limited capacity.

As mentioned, one use of the user interface is to enable the user to enter the parameters of a structured query for the database. By a structured query, we mean, a query that is based on the structure of the database and its fields, for example, a search in which values of at least some of the fields of the database are specified, as opposed to a free-form query (for example, a search of text for specified words).

In the example shown in figure 37, a structured query could involve the user in specifying the values of one or more of the categories that are to be used in the query. The user need not specify values for all of the categories but could allow default values to be applied (for example, the default "all records"). Once the user has specified the values, he can indicate that he is finished which would cause the query to be applied to the database.

One way for the user to indicate the values of the categories is to display information about possible values to the user, and to enable the user to navigate among the values, and to select values that are displayed. Some examples of such an interface are shown in United States patent application serial number 10/752,391, filed 1/6/2004, incorporated by reference

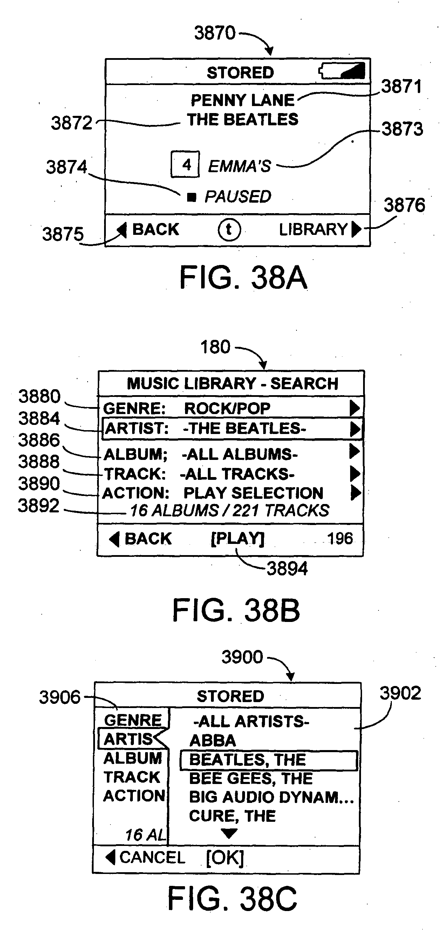

In implementations discussed in that patent application, and referring to FIGs. 38A, 38B, and 38C, screens 3870, 3880 and 3900 show the selection of stored music. Stored music sources could include large volume disks, or any device of location in which large numbers of items can be stored for use. The stored music could be stored in the music system itself or in a location that is external to the music system. Stored music can be hierarchically arranged in a database, for example arranged according to genre, artist, album, and track. (Additional information about storage systems, their relationship to music playing systems, and the creation and management of such a database is found in the two patent applications cited earlier.) A user selects a particular subset of all stored music by navigating in a hierarchy. While, in this example, a music database is arranged hierarchically, other databases can be navigated in a similar manner.

A user navigates to a stored music screen 3870 by choosing the stored music source. Information about the music stored in a stored music source may include, as shown on the stored music screen, a title 3871, an artist 3872, a preset 3873, and a play state 3874. The stored music screen also includes a navigation bar with a back option 3875 and a library option 3876. When a user selects the back option 3875 by pressing the backward arrow, the previously viewed screen is displayed. When a user selects the library option 3876 by pressing the forward arrow button, a music library search screen (shown in FIG. 38B) is displayed. Preset 3873 in this example includes both the preset number and the user's name. A preset (for example, a preset for a stored music source) can be associated with a particular user. A preset can also, at the user's discretion, be associated with a mood, music style, or any other organizing principle.

The search screen 3880 includes a listing of general categories used to search for music within the stored music source. In screen 3880, the current genre setting 3882 is rock/pop, the artist setting 3884 is The Beatles, the album setting 3888 is all albums, and the track setting 3890 is all tracks. Screen 3880 also displays the number of albums and tracks 3892 associated with the current settings. If a user desires to play the selected set of music, the user selects the play option 3894 from the navigation bar 3896. If the user selects a set of items, such as a genre or an artist, the system plays items from that set in an order determined by how the user has set the uMusic features to work. The user can move up and down in the list of categories by pressing the enter button up (e.g., toward the display) to navigate to items prior to the currently highlighted item in the list and pressing the enter button down (e.g., toward the other buttons) to move to items subsequent to the currently highlighted item. As the user navigates up and down in the list, each of the items is highlighted in turn. If the user desires to edit the current settings for a particular category, the user navigates to the particular category (such that the category is highlighted) and presses the right arrow button for the category to enter a selection screen, for example, the select artist screen 3900.

Screen 3900 is generated in response to a user highlighting the artist category 3884 and pressing the forward arrow button on remote control. Thus, a list of artists is displayed on a portion 202 of the body of the display. A remaining portion 3906 of the display includes a partial view of the previous screen 3880. Because the new screen does not completely overlay (i.e., obscure) the previous screen, the user is able to view the previous options and does not lose sight of where he navigated from to enter this screen. Thus, a portion of the higher level of the hierarchy is still visible, while another portion is obscured. A user navigates in the select artist screen by pressing the enter button upward (e.g., toward the display) to navigate to items prior to the currently highlighted item or pressing the enter button down (e.g., toward the other buttons) to move to items subsequent to the currently highlighted item. As the user navigates up and down in the list, each of the selections is highlighted in turn. To choose a particular selection, in this example an artist, the user navigates to the desired artist and presses the enter button. Upon making a selection in the selection screen shown in screen 3900, the user returns to the previous level of the hierarchy as shown in screen 3880. If the user decides not to make a selection, the user selects the cancel option 3908 by pressing the backward arrow button. This selection also returns the user to the previous level of the hierarchy as shown in screen 3900.

For each category in the search library screen 3880, the user can navigate to a selection screen as described above for the artist category. A user can choose particular selections for each category, or can choose to play or rate all tracks associated with the category. He can also choose to add all tracks in a category to a playlist. The number of albums and tracks corresponding to the current search settings is displayed in the albums and tracks listing 3892. The user can select to play the subset of stored music from the search by selecting the play option 3894 by pressing the enter button. He can rate the subset using buttons 3886 or 3888, and can add them to a playlist using button. The hierarchical navigation could be more than two levels deep.

Although the example concerns a music hierarchy, the display method is not limited to this example. The partial overlaying of a screen to show a portion of the previous level in a hierarchy is applicable to any hierarchical selection menu. In addition, the display method can be used to navigate among multiple levels in the hierarchy. When multiple levels are used, a portion of each of the previous levels can remain visible, only the previous level can remain visible, or a set number of levels of the hierarchy can remain visible on the display.

Referring again to figure 37, in some examples, when the user invokes "genre", the values of genre (including the default "all" value) can be displayed in a scrollable list. The user may then choose one of the values, say "Jazz". Data 1709 is delivered from the database to the interface to enable such a display. When a value is selected for a category, that selection controls the available value choices that are displayed for other categories that are narrower than the first category. For example, for tracks in the database that are of the genre "Jazz", not all possible values for artists exist. No track for which Arthur Rubinstein is the artist will be of the genre Jazz. Accordingly, once the user has selected Jazz, the values of artists that are displayed will not include Arthur Rubinstein even though he is one of the artists for which there are tracks in the database. Thus, the user is never put in the position of sending a search to the database for records that can be known in advance not to exist in the database. And the number of value choices that must be displayed to the user is potentially smaller (even much smaller) than would otherwise be the case.

As soon as the user selects a value for a category, the values for the other categories may be updated (if required) which in effect amounts to a search being done in the database or a narrowing of the search each time another category is subjected to a value selection by the user.

At any point in the searching or search narrowing, the user may indicate an action to be taken with respect to the records that have been selected from database. For example, the user may indicate that the selected tracks should be played. The order in which selected tracks are played back may be directly specified by the user, or may be determined automatically by the track selection process based on preference information. In another example, the user may indicate a positive preference, in one action, for all of the tracks that have been selected. see claim 301

Two or more different users may formulate queries and have them applied to the database at one time. The database performs the queries and returns the results to the respective user interfaces.

In implementations that involve music tracks, the categories in the database may include, in addition to those already mentioned, producer, composer, ensemble, conductor, featured performer, year (of composition or recording or performance), track number, and others. In particular, for classical works, searching by ensemble and also by composer and performance is especially useful.

Linking of tracks

In some implementations, the track selection process may be constrained in its selection of tracks to be performed always to play certain tracks after other tracks, based on, for example, information provided by the user, or information derived automatically by the database. As an example, the user may wish to have the track selection process never choose to play fewer than all of the tracks on a CD. The user interface can enable the user to indicate the tracks that are to be linked and played in a sequence together. The system can be arranged so that, whenever it is the track selection process that chooses tracks for performance, the linked tracks will be played in the specified sequence. Conversely, whenever the user is doing direct manual selection of tracks, the linking can be overridden, for example, to permit a user to play a single track within a linked group.

The linking of tracks need not be only within a single CD, but could span multiple CDs or multiple other sources. For example, a user could cause the track selection process never to play a rock song that is in his collection unless that song is followed by a performance of an interview of the artist that is available online.

The user's instructions for linking the tracks can be provided by the user in a variety of ways. The instructions will typically indicate the order in which the tracks are to be played. Once the user has establishing the linking of certain tracks as a group, he can select that group for performance without having to select all of the tracks individually. The input provided by the user through the user interface can be limited to certain choices with respect to a particular CD, for example, telling the system to link none of the works on the CD, or to link a subset of the works on the CD, or to link all of the works on the CD, or to automatically link tracks based on the preference information of the user. If the system does not have useful information on which to base an automatic decision to link tracks, it can make no links. In some examples, the system may be instructed to, or may automatically determine to link movements of a classical work on a CD.

Information about links among tracks may be maintained in the database in the form of a flag that indicates whether the track is associated with a previous linked track (and a pointer to that previous track) and another flag that indicates whether the track is associated with a subsequent linked track (and a pointer to the later track). The track selection process can be configured never to select a track that has the first flag set, unless the previous track has been put into the play list, and when the subsequent track flag is set, always, to add the next track to the play list.

Storing preference information

In many of the example implementations discussed in this document, bodies of preference data are generated and maintained that are associated with one or more users or groups of users and that relate to one or more sets or libraries or collections of digital works. The bodies of preference data exist independently of the works themselves and can be stored in a wide variety of storage devices and communicated on a wide variety of communication channels. In some examples, a body of preference data can be stored on a portable storage device such as a hard disk or a CD or a flash memory, for example. Then the portable storage device can be coupled to different processors at different times so that it can be used by different track selection processes to select play lists. The preference data includes identification of the related works, for example, based on their unique assigned album identifiers.. The preference data can include a score for each work and a confidence level with respect to the score. The data for each of the works can be stored within a very small space, for example, no more than about 64 bits per work, which permits preference data for a very large volume of works to be stored on a very portable storage device or to be communicated in a very short amount of time or over a relatively low bandwidth channel.

In some implementations, the digital works that are included in a play list selected by a track selection process, can be stored as a body on a portable storage medium such as a hard disk, a CD, or a flash memory. The works can be stored in a sequence of tracks in an order determined by the track selection process so that they are also performed in that order in the absence of user intervention. Preference information used to control the order of play at a later time when the works are performed may also be loaded onto the storage device. In that case, the digital works need not be stored in any particular order. In addition, the storage device may hold digital works in folders and subfolders. Each folder may contain preference information and the digital works may or may not be stored in a sequence that is pre-determined by the track selection process.

## Suggestions for future purchases

After a user has used the selection system for a sufficient period of time, the scoring values of the nodes in the graph will correlate well with how well the user likes the various groups of tracks. Score values close to +1 indicate a strong preference, and score values close to -1 indicate strong dislike.

The system could be extended to temporarily insert data about CDs that the user does not actually own into the graph. The information would be derived from one of the external metadata sources previously described. Once inserted into the graph, the CDs' score could be calculated, using values inherited from the CDs' parent nodes. If the CD receives a high score, the system could recommend that the user purchase the CD. Following the recommendation, the CD data would be removed from the system's graph.

## Suggesting items to delete

The selection system utilizes a finite-capacity storage mechanism. At some point, it is likely that the system's storage capacity will be exhausted. When this happens, the system could list the tracks or CDs with the lowest score/ weight values, and suggest that these be deleted.

## Pre-seeding

The system may permit the user to "pre-seed" the feedback in the stored tracks graph with preference data. For instance, while in search mode, the user could indicate to the system that he or she likes or dislikes an entire artist, album, or genre. The feedback could then be applied directly to the appropriate node in the stored tracks graph. In these examples, pre-seeding merely sets initial values for the nodes; they would continue to be updated as described above in the normal course of track playback.

## Smart state recovery

The user may switch out of "automatic selection" mode for brief periods of time. For instance, the user may switch to the radio to check traffic or baseball scores. If the user switches back to "automatic selection" mode within a short amount of time (e.g., 1 hour), the system could restore its state, including short-term preference variables, current track information, and play history information, to be exactly as it was when "automatic selection" mode was suspended. After this time period, the system would behave as if it was just starting, by resetting the play list history and short term preference information.

## On-screen display.

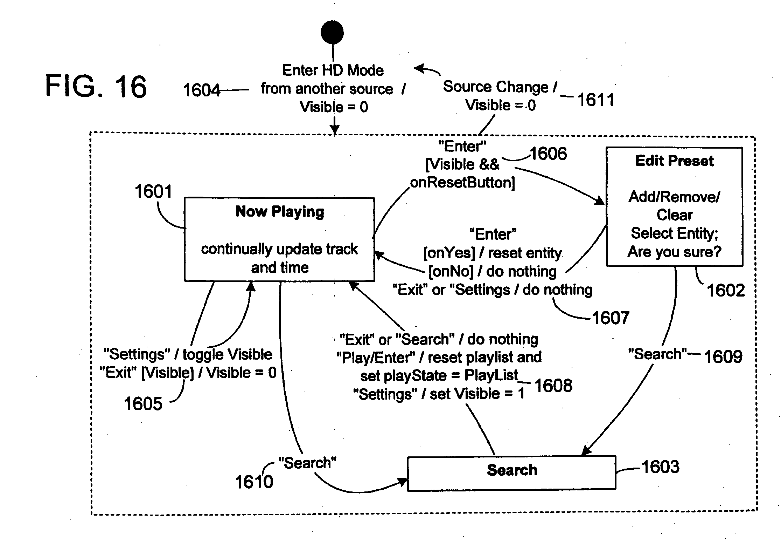

When the selection system is playing content from its hard drive (i.e., in any mode other than CD Mode or AM/FM Mode), its on-screen display is defined by the state diagram in figure 16. The OSD Module is activated 1604 when playing tracks from the system's hard disk. In the "now playing" state 1601, minimal information may be displayed. When the user presses 1605 a "settings" button 1801 (see figure 18), more detailed information about the currently-playing track appears or disappears (see figure 26). When the user presses 1606 the enter button, if detailed information about the currently-playing item is shown, the Edit Preset screen of the Edit Preset state 1602 appears (see figure 19). There, the user can add or remove an item from a preset (or, in the case of a user station, give the item positive or negative feedback), or entirely clear a preset (including the playlist and user stations). When the user presses Enter 1607, the system asks him or her for confirmation; if the user presses yes, the OSD sends a reset message and returns to the Now Playing state. If the user chooses no, or presses Exit or Settings instead of Enter, the system returns 1607 to the Now Playing state without doing anything.

From the Edit Preset and Now Playing states, when the user presses 1609, 1610 "Search," 1802 the system enters 1609 Search mode 1603 (see "Modes of Operation," above), allowing the user to search for tracks to play. From search mode, if the user presses Exit or Search, the module returns 1608 to Now Playing mode without doing anything. If the user presses Play or Enter, the module resets the playlist and sets the current play state to "PlayList." The OSD module returns 1608 to Now Playing mode. If the user presses the Settings button, the system displays detailed information about the currently playing item, and returns 1608 to the Now Playing state.

Play States module

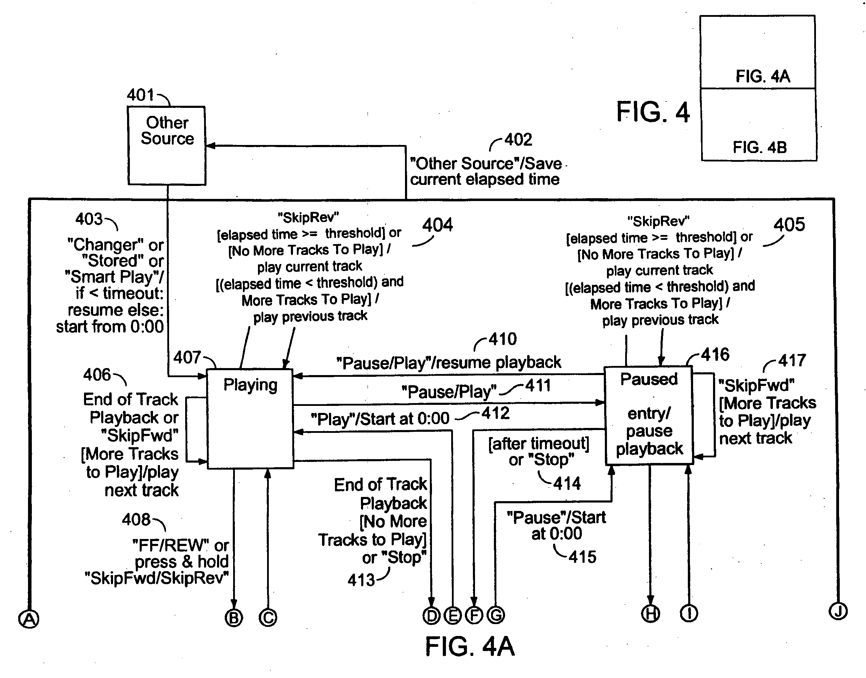

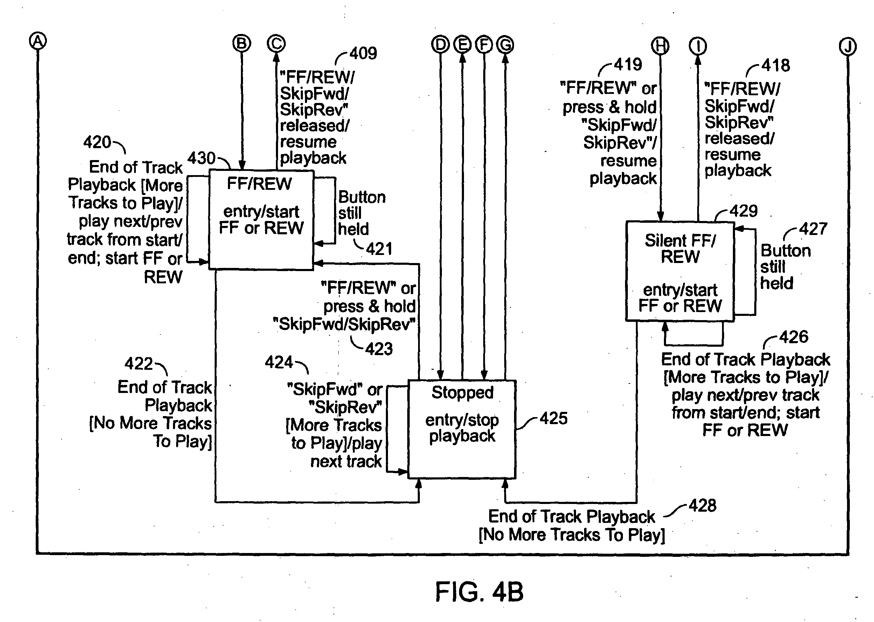

Some implementations of a play states module may operate as described in figure 4. The module enters 403 the Playing state 407 from a non-hard disk source 401 when the user presses Changer or Smart Play, or when a track is stored. If the system was last in Playing mode less than k minutes ago, where k is a constant (e.g., five minutes), the module resumes play from where it left off; otherwise it starts at the beginning. When the end of a track is reached, or the user presses skip track, the system advances to the next track, if there are remaining tracks, and returns 406 to Playing mode. If the user presses Previous track, and more than a pre-specified amount of time (e.g., 3 seconds) has elapsed since the beginning of the track, or if the system is already playing the first track, the system plays the current track from the beginning and returns 404 to Playing mode. If the amount of time the system has been playing is less than the threshold, and there are previous tracks, the system skips to the previous track and resumes 404 playing. If the user presses Pause/Play while in Playing mode, the module switches 411 to Paused mode 416, and pauses playback. If the end of the track is reached, and there are no more tracks to play, or if the user presses Stop, the module switches 413 to stopped mode.

While play is paused 416, if the user presses "Previous track," and playback has proceeded for more than a pre-specified amount of time (e.g., 3 seconds), or the module is already playing the first track, the module starts the current track from the beginning, but remains 405 in pause mode. If playback time is less than the threshold, and there are previous tracks, then the module switches to the previous track, and remains 405 in pause mode. If the user presses "Skip Track," and there is a next track, the system skips to the next track, and remains 417 in pause mode. If the user presses "Pause/Play" while the module is paused, the module switches 411 to Playing mode. If the user presses and holds Previous Track or Next Track or Fast Forward or Rewind while playback is paused, the module switches 419 to Silent FF/RW mode 429. After a pre-specified timeout (e.g., 5 minutes), or if the user presses stop, the module switches 414 to Stopped mode. If the user presses Play/Pause, the system resumes playback 410.

In Silent FF/RW mode 429, the module fast-forwards or rewinds silently. If it reaches the end of the track, and there are more tracks to play (either before, in the case of rewinding, or after, in the case of fast-forwarding, the current track), it skips to the end or beginning of the next or previous track, and resumes 426 silently rewinding or fast-forwarding. It continues 427 as long as the user holds down the button. If it reaches the end of the track, and there are no more tracks to play, the module switches 428 to "stopped" mode. When the user releases the button, the module returns 418 to the paused state. If the end of the track is reached, and there are no more tracks to play, the module enters 428 stop mode 425.

In stop mode 425, if the user presses Next Track or Previous track, and there is a next or previous track, the system skips to that track, and remains 424 in stop mode. If the user presses Play, the system begins to play 412 the current track from the beginning. If the user presses and holds fast forward, rewind, next track, or previous track, the system switches 423 to FF/Rewind mode 430. If the user presses pause, the system sets the elapsed time to be 0, and enters 415 pause mode for the current track.

While in Play mode, if the user presses and holds fast forward, rewind, previous track, or next track, the system switches 408 to FF/Rewind mode 430. The module audibly fast-forwards or rewinds the track. The module remains 421 in this mode while the button is held. If the module reaches the end of the track, and there are more tracks to play, it switches to the end of the previous track, if rewinding, or the beginning of the next track, if fast-forwarding, and continues 420 in the current state. When the user releases the button, the system switches 409 to play mode.

When a source button is pressed (such as tape, AM/FM radio, or CD/DVD), the system switches 402 to that mode, after saving the current elapsed time for the track.

Variations

Although various implementations have been described, other embodiments are also within the scope of the following claims.

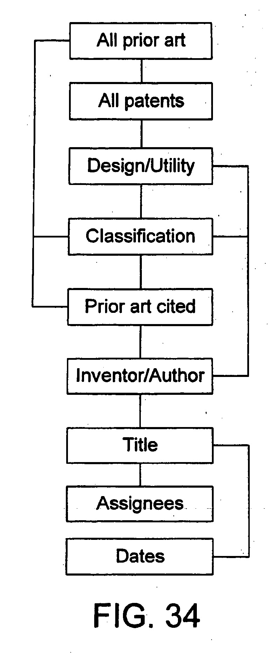

For example, any body of items that are to be searched or used and for which metadata that ties the items to one another hierarchically or otherwise could be subjected to a similar selection based on explicit and implicit preferences of a user. For example, in the case of a database of items, the user could phrase a conventional search. The system could produce a first "hit" from the search and display it to the user. The user could indicate his satisfaction or dissatisfaction with the first hit. The system could then rescore the items that resulted from the initial search, based on relationships indicated by the metadata. The system could then deliver another hit to the user in a manner similar to the way in which a next track is selected in the system described above for music. In the same way that the system described above adapts itself to deliver tracks of interest to the user, the database system could adapt itself to deliver hits of interest to the database searcher. A specific example of such a database could be used to search for patents in a patent database. The metadata that captures title, assignee, patent number, classification, prior art cited, whether it is a design or utility patent, who the inventor is, and other information could be used. Figure 34 provides an example structure of a stored tracks tree for such a variation.

Another example would be surfing the world wide web. Metadata associated with web pages could include IP addresses, titles, length, language, domain name, and other information. When a search produces a hit the user could indicate whether it suits his needs or not. Then the system could quickly adapt to deliver ever more relevant hits to the user's browser.

Although some examples have been discussed above, other implementations are also within the scope of the following claims.

**Claims**

1. A method comprising
   based on user preference information about digital works, selecting available digital works to be included in at least two different sequences of digital works to be performed, the different sequences being based on different aspects of the preference information, and
   enabling the different sequences to be performed at the same time by a performance system.

2. The method of claim 1 in which the selecting is performed by multiple instances of a work selection process.

3. The method of claim 1 also including delivering the digital works of the different sequences for performance from a single mass storage device.

4. The method of claim 1 in which the different aspects of the preference information are associated with different users or groups of users.

5. The method of claim 1 in which
   the selecting for different sequences is done by different instances of a digital work selection process.

6. The method of claim 5 in which the different instances do the selecting using a common network of nodes of information about the digital works.

7. A method comprising
   receiving incoming preference information that is being provided about digital works being performed, and
   while the incoming preference information is being provided, selecting the digital works to be performed based on a body of preference information in a manner that is not affected by the incoming preference information.

8. The method of claim 7 in which the incoming preference information is from one user or group of users and the digital works to be performed to that user or group of users are selected based on preference information provided by a different user or group of users.

9. A method comprising
   receiving preference information provided from two different sources about digital works being performed with respect to the two different sources, and
   using the received preference information from both of the sources to select digital works to be performed.

10. The method of claim 9 in which the preference information is provided from the two different sources by a single user at two different times.

11. The method of claim 9 in which the preference information is provided from the two different sources by two different users.

12. A method comprising
    receiving preference information from a user about digital works that are being performed for the user and are not in a collection of the digital works that belong to the user, and

storing the preference information to be used to select digital works to be performed for the user, from the collection of digital works that belong to the user.

**13.** The method of claim 12 in which the works that are being performed for the user belong to a second collection.

**14.** The method of claim 12 also including selecting the digital works using the preference information, the selecting including

generating a first network of nodes using first stored preference information associated with works that have been performed for the user,

generating a second network of nodes using second stored preference information associated with works in the collection,

propagating the first stored preference information through the second network.

**15.** The method of claim 14 in which

only values of the ancestors of the track that are actually present in the second collection are updated.

for works that have been performed but are not in the collection, applying, to the second network, first preference information for works that are related to works in the collection but are not themselves in the collection.

**16.** A method comprising

enabling a user of a first remote control device to formulate a first structured query of a database of digital works available at a music system that interacts with the remote control device, and

sending the structured query to the music system.

**17.** The method of claim 16 also comprising enabling a user of a second remote control device to formulate a second structured query of the database while the first structured query is being formulated.

**18.** The method of claim 17 in which the first structured query and the second structured query are provided independently and actions are taken in response to the respective queries independently.

**19.** A method comprising

enabling a user of a remote control device to explicitly indicate first preferences with respect to digital works being performed by a music system, and using the preference indications in selecting a first future sequence of digital works to be performed.

**20.** The method of claim 19 also including enabling a user of a remote control device to explicitly indicate second preferences with respect to digital works being performed by the music system, and using the other preference indications in selecting a second future sequence of digital works to be performed.

**21.** The method of claim 20 in which the first preferences and the second preferences are indicated by a single user.

**22.** The method of claim 20 in which the first preferences and the second preferences are indicated by a single user on two different remote control devices.

**23.** The method of claim 20 in which the first preferences and the second preferences are indicated by two different users on two different remote control devices.

**24.** The method of claim 20 in which the first future sequence and the second future sequence are performed for two different users.

**25.** A method comprising

enabling a user to define one or more values to be used in querying a database of information about digital works, the values to be used to identify a subset of the database,

performing an action with respect to the subset, and

generating a list of some of the digital works to be performed based on preference information about the works, the digital works on the performance list belonging to the subset.

**26.** A method comprising

enabling a user to define one or more values to be used in querying a database of information about digital works, the values to be used to identify a subset of the database, and
associating a user-specified preference with digital works in the subset.

**27.** The method of claim 25 also comprising
enabling the user to indicate the action that is performed with respect to the subset.

**28.** The method of claim 25 in which the enabling comprises displaying for the user at least one identifier of a field of the database

**29.** The method of claim 28 in which the enabling comprises permitting the user to identify a value of the field.

**30.** The method of claim 28 in which the enabling comprises permitting the user to indicate a default representing any value of the field.

**31.** The method of claim 28 in which the field of the database comprises at least one of genre, artist, album, producer, composer, ensemble, conductor, featured performer, and year

**32.** The method of claim 25 in which the user is enabled to select the values from a list that is arranged from more general to less general.

**33.** The method of claim 32 in which the less general criteria may have values associated with more than one possible value for of an item that lies at a more general level.

**34.** A method comprising
displaying to a user identifiers of categories of digital works that may be performed for a user, each of the categories including a set of the digital works,
at least a broader one of the categories including digital works that belong respectively to more than one of the narrower categories,
at least a narrower one of the categories including digital works that belong respectively to more than one of the broader categories,
enabling a user to select a value for the identifier of one of the broader categories, and
enabling the user to select a value of the identifier of one of the narrower categories, the value being constrained based on the selected value of the broader category.

**35.** The method of claim 34 in which the categories include at least two of genre, artist, album, producer, composer, ensemble, conductor, featured performer, and year.

**36.** The method of claim 34 also including enabling the user to navigate among categories using a manual control and to navigate among possible values with respect to a given identifier using a separate manual control.

**37.** The method of claim 34 also including querying stored information about the digital works using the broader category value and the narrower category value selected by the user.

**38.** The method of claim 34 also including enabling the user to navigate among possible values with respect to a first identifier of a broader category, and updating the display of values available for selection with respect to a second identifier of a narrower category to include only values that are permitted by the broader category value to which the user has navigated.

**39.** A method comprising
with respect to at least two digital works that are available at two separately addressable locations, in one operating mode of a device that performs the works, automatically preventing the performing of one of the works without also performing another of the works.

**40.** The method of claim 39 in which the two digital works are sequential.

**41.** The method of claim 39 also including receiving a request from a user to have at least one of the works performed.

**42.** The method of claim 41 in which the, request of the user comprises a request to play a group that has been defined to include the two digital audio works.

**43.** The method of claim 39 in which the works are stored at two separately addressable locations on a storage medium.

**44.** The method of claim 43 in which the medium comprises a CD.

**45.** The method of claim 39 in which the one operating mode comprises automatically selecting works for performance based on user preferences.

**46.** The method of claim 39 in which, in another operating mode, each of the one work and the other work may be performed individually upon request by a user.

**47.** A method comprising
associating at least two digital works that are at separately addressable locations in a manner that identifies them as works that are to be performed together, the digital works including fewer than all of the digital works stored on a given storage medium.

**48.** The method of claim 47 in which the associating is based on metadata describing the digital works.

**49.** The method of claim 47 in which the associating is based on information provided by a user.

**50.** The method of claim 49 in which the information provided by the user identifies two or more digital works stored on a single medium that are to be associated.

**51.** The method of claim 49 in which the information provided by the user indicates at least one of: associating none of the works stored on a single medium, associating all of the works stored on the single medium, or automatically associating at least some of the works stored on a single medium.

**52.** The method of claim 51 in which, even when the user indicates automatically associating at least some of the works, no association is done.

**53.** A method comprising
in a user interface for controlling a device that performs digital works, enabling a user to identify at least two works to be associated in a manner that causes them to be performed together.

**54.** The method of claim 53 in which the user is enabled to identify at least two works that are stored on a single medium.

**55.** The method of claim 53 in which the user is enabled to identify works that are stored on a single medium in at least one of the following ways: associating none of the works stored on a single medium, associating all of the works stored on the single medium, or automatically associating at least some of the works stored on a single medium.

**56.** The method of claim 55 in which, even when the user indicates automatically associating at least some of the works, no association is done.

**57.** A method comprising
using metadata about digital works to automatically associate at least two digital works in a particular order, and
when a preference-based selection process selects one of the works to be included in a sequence of works to be performed, the process always selects the other of the two works to be included next in the sequence.

**58.** The method of claim 57 in which, when the selection process selects one of the works, all of the works that are automatically associated by the metadata are included in the sequence for performance in an order specified by the metadata.

**59.** A method comprising
for each work of a set of digital works, storing information identifying the work and preference data that indicates a preference of one or more users for performance of the work, the information and preference data being stored on a portable storage medium.

60. The method of claim 59 in which the identifying information comprises an album number, a medium number, and a track number for a compact disc.

61. The method of claim 60 in which the album number may comprise a unique album identifier.

62. The method of claim 61 in which the preference data comprises a score.

63. The method of claim 61 in which the preference data comprises a value representing a confidence level for the preference data.

64. The method of claim 61 in which the information and data for each of the works comprises no more than 64 bits per work.

65. A medium bearing information to enable a device to select a series of digital works to be performed based on preferences for performance of the works, the information comprising information identifying the work and preference data that indicates a preference of one or more users for performance of the work.

66. The medium of claim 65 comprising a portable storage medium.

67. A method comprising
    enabling searching of a database of information about digital audio works to be performed by selecting a set of values for categories to which the digital works belong, the categories including an identifier of an ensemble associated with the work, taking an action with respect to results of the searching, and
    selecting a sequence of works to be performed in part based on the action.

68. The method of claim 67 in which the categories include identifiers of a composer, and performance.

69. A method comprising
    enabling a user to search a database of information about digital audio works to be performed by selecting a set of values for categories to which the digital works belong, the categories including at least one broader category and at least one narrower category,
    the identity of the narrower category from which values may be selected depending on the identity of the broader category from which values may be selected,
    the broader category comprising classical music and the narrower category comprising ensemble.

70. A method comprising
    selecting a set of digital works to be performed, the list being based on a probabilistic application of user preferences, the set being selected from a larger library of works, and
    storing the list of digital works on a portable medium.

71. The method of claim 70 also including storing the.works on the medium in an order determined by the selecting.

72. The method of claim 70 also including storing preference data associated with the user preferences on the medium.

73. The method of claim 72 also including storing the digital works on the medium in an arbitrary order.

74. The method of claim 70 also including storing the digital works on the medium in folders each including a selected set of digital works to be performed.

75. The method of claim 74 in which the works are stored in each folder in an order determined by the selecting.

76. The method of claim 74 in which the respective folders are identified within an order of relative preference based on the user preferences.

77. The method of claim 70 also including

storing preference data associated with the user preferences and the digital works on the medium, and using the stored preference data to control the order of playback of the works stored on the medium.

78. The method of claim 70 in which the portable medium is portable independently of any device used to select or perform the digital works.

79. A method comprising
using information provided by a third party about a digital work to be performed in maintaining stored preference information about digital works that may be selected probabilistically for inclusion in a sequence of digital works to be performed for a user.

80. The method of claim 79 in which the third party comprises a critic.

81. The method of claim 79 in which the information provided by the third party comprises an indication of at least one of the tracks of a CD that is considered to be preferable to other tracks of the CD.

82. The method of claim 79 in which the probability of selection of a digital work is increased based on the information provided by the third party.

FIG. 1

FIG. 2

FIG. 3

EP 1 548 740 A2

401 —

Other Source

402
"Other Source"/Save current elapsed time

403 —
"Changer" or "Stored" or "Smart Play"/ if < timeout: resume else: start from 0:00

"SkipRev"
[elapsed time >= threshold] or [No More Tracks To Play] / play current track
[(elapsed time < threshold) and More Tracks To Play] / play previous track

404

"SkipRev"
[elapsed time >= threshold] or [No More Tracks To Play] / play current track
[(elapsed time < threshold) and More Tracks To Play] / play previous track

405

406 —
End of Track Playback or "SkipFwd" [More Tracks to Play]/play next track

407 —

Playing

410
"Pause/Play"/resume playback

"Pause/Play" — 411

"Play"/Start at 0:00 — 412

416

417
"SkipFwd" [More Tracks to Play]/play next track

Paused

entry/ pause playback

[after timeout] or "Stop"

414

"Pause"/Start at 0:00

415

408 —
"FF/REW" or press & hold "SkipFwd/SkipRev"

End of Track Playback [No More Tracks to Play] or "Stop"

413 —

Ⓐ      Ⓑ  Ⓒ        ⒹⒺⒻⒼ        Ⓗ  Ⓘ        Ⓙ

FIG. 4A

FIG. 4

FIG. 4A

FIG. 4B

42

FIG. 4B

**500**

[No Disc Present]

[Disc is Present]
read TOC and lookup
metadata in database

**508**

"Store"
[No Tracks Left To store] /
display "Already Stored"

Disc Ejected /
clear saved metadata

**No Disc
Present**

**501**

Disc Inserted /
read TOC and lookup
metadata in database

**503**

**Disc
Present/
Idle**

**502**

Store Complete
[No Tracks Left To store] /
display "Store Complete"

**506**

"Store"
[Tracks Left To store] /
save list of unripped tracks

**504**

**507**

Disc Ejected /
delete file in progress;
clear saved metadata

**Storing**

do: store
track;
add track to
metadata
network;
continually
update
progress

**509**

Store Complete
[More Tracks Left To store]

**505**

FIG. 5

FIG. 6

FIG. 7

FIG. 8

901 —— **Album Title:** *Select an album* ▼

902 —**Track:** *Select a track* ▼

903 —**Artist:** *Select an artist* ▼

904 —**Genre:** *Select a genre* ▼

905

Selection size is 1164 tracks (812:39:19)
Result includes tracks by 53 artists on 918 albums.

## FIG. 9

**Albums**

| Album ID | Genre | Arist name | Album Title |
|----------|-------|------------|-------------|
| 1 | Classic Rock | Beatles | Sgt. Pepper |
| 2 | Musicals | Gershwin | Crazy for You |

**Tracks**

| Album ID | Track number | Track title |
|----------|--------------|-------------|
| 1 | 1 | With a little help... |
| 1 | 2 | Lucy in the Sky ... |
| 2 | 1 | Bidin' My Time |
| 2 | 2 | I Got Rhythm |

# FIG. 10

48

| ALBUMS |
|---|
| TRACKS |
| FIG. 11A |
| ARTISTS |
| STYLES |
| FIG. 11B |

**FIG. 11**

**Albums**

| Album ID | Genre | Styles | Artist ID | Title | Sortable title | Similar albums |
|---|---|---|---|---|---|---|
| 1 | Rock | 1; 2 | 1 | Sgt. Pepper | Sgt. Pepper | 12; 18 |
| 2 | Musicals | 3; 4 | 2 | Crazy for You | Crazy for You | 7; 44; 109 |

**Tracks**

| Album ID | Media number | Track number | Track title | Sortable track title | Artist ID |
|---|---|---|---|---|---|
| 1 | 1 | 1 | With a little help... | With a little help... | 1 |
| 1 | 1 | 2 | Lucy in the Sky ... | Lucy in the Sky ... | 1 |
| 2 | 1 | 1 | Bidin' My Time | Bidin' My Time | 2 |
| 2 | 1 | 2 | I Got Rhythm | I Got Rhythm | 2 |

**FIG. 11A**

**Artists**

| Artist ID | Name | Sortable Name | Styles | Tones | Similar artists |
|---|---|---|---|---|---|
| 1 | 1 | 1 | With a little help... | With a little help... | 1 |
| 1 | 1 | 2 | Lucy in the Sky ... | Lucy in the Sky ... | 1 |
| | | | | | |
| 2 | 1 | 1 | Bidin' My Time | Bidin' My Time | 2 |
| 2 | 1 | 2 | I Got Rhythm | I Got Rhythm | 2 |

**Styles** — 1101

| Style ID | Style name | Genre |
|---|---|---|
| 1 | Classic Rock | Rock |
| 2 | Oldies | Rock |
| 3 | Dance musicals | Musicals |
| 4 | Musical revivals | Musicals |

## FIG. 11B

EP 1 548 740 A2

FIG. 12

1306  1301
1307  1302  -1
1308
Vol -   Vol +  1303  -1/3
1309  1304  +1/6

1311
Track Node

1310  <Track completes>

1305  +1/3

**FIG. 13**

1403
First-played track
Second-played track
Third-played track
1401 ⋮
n-1st-played track
1402 nth-played track
1404

**FIG. 14**

| Preset |
|---|
| *Tracks* |
| <list of tracks in preset> |
| *CD* |
| <single CD to associate with preset> |
| *Bins* |
| <list of CDs> |
| *Stations* |
| conservatismThrottle |

**FIG. 15**

# FIG. 16

EP 1 548 740 A2

**FIG. 17**

Preset: *5 (Bill's Music)*
Action: *Clear*

**FIG. 19**

FIG. 18

2019
"Stored"
[lastPlayState == User Station]
or
"Smart Play"/um to last-used
User Station

2005
"1-9" [!= current]
change User Station

2001
Automatic
Selection

2006
EndOfTrack
Playback

entry/lastPlayState =
User Station; stop
playback, start playback
at next track in history or
use algorithm to choose
new track

2014
"Smart Play"/return to
last-used User Station
or
End of Track Playback
[No More Tracks to Play
& playListCameFrom ==
User Station]

"Other Source"/preserve
module variables
2020

2009
"Search" result
"0/Playlist" "Whole Album"/
playListCameFrom =
User Station

2002
Tracks

"Other Source"/preserve
module variables

2018

Other
Source

2004

"Stored"
[lastPlayState ==
Playlist] or "Playlist"
2017

2007
"Changer"
"10-XXX"

2010
"Search" result "0/Playlist"
playListCameFrom=Slot

entry/
lastPlayState =
Playlist stop
playback; start
playback at next
track in playlist

End of Track Playback
[More Tracks to Play]/
++trackIndex
2016

"Smart Play"
2008

Ⓐ Ⓑ Ⓒ Ⓓ Ⓔ Ⓕ Ⓖ Ⓗ

FIG. 20A

EP 1 548 740 A2

56

Ⓐ    Ⓑ    Ⓒ    Ⓓ    Ⓔ   Ⓕ    Ⓖ Ⓗ

"Changer"/return to
last-used slot
or
End of Track Playback
[No More Tracks To
Play & playListCame
From == Slot]
2015

2011
End of Track
Playback [More
Tracks to Play]/
++TrackIndex

2003
Changer

2022
"Stored"
[lastPlayState == Slot]
or
"Changer"/return to
last-used slot

2012
"1-9" or "10-XXX"
[!=current] change
Slot

entry/
lastPlayState=Slot;
stop playback;
start playback at
next track in playlist

Whole album/
Start album over
2023

2013
End of Track Playback
[No More Tracks to Play]/
Select Next Slot?

"Other Source"/
preserve module variables
2021

**FIG. 20B**

| | |
|---|---|
| **FIG. 20A** | |
| **FIG. 20B** | |

**FIG. 20**

EP 1 548 740 A2

FIG. 21

2108
Button Presses
(0-9, Navigation, Speedups)

2101

OSD

2102

Button Presses
(Source Change,
Mode Change,
Rating,
Next Track)

Control
UI

2110
Button Presses
(Transport Controls)
except Next Track,

Search
Result

2121

2109

2103

PlayModes

2111

2120

Reset

2124

2119

current track info/
Search Interaction

Get Next Track;
Play Track;
getCurrentState()

Change to
"Stopped";
Play Track;
getCurrentState()

2104

PlayerStates

(Playing, Paused,
Stopped, FF, REW,
SilentFF, SilentREW)

2105

Get Next Track;
Get Playlist;
handleFeedbackEvent

Automatic
Selection

getCurrentTrack,
getPreviousTrack,
getNextTrack

2117

End of Track
Playback;
TimeUpdate

2113

add track to network,
TOC/Track already ripped?

2122

2114

2106

"Store"
Button
End of Track
Playback

2118

Ripper

2123

Time Update /
New Track Playing

ripTrack

RipTime Updates,
CD Inserted/Ejected/Ready

MusicPlayer

Transport Controls,
Play Track

2116

2115

2112

2107

EP 1 548 740 A2

FIG. 22

FIG. 23

EP 1 548 740 A2

FIG. 24

FIG. 25

2601 — **Album Title:** *Beatles*
2602 — **Track:** *Let It Be*
2603 — **Artist:** *Beatles*
2604 — **Genre:** *Pop*
2605 — **Elapsed Time:** *2:12*
2606 — **User station:** *5: Bill's Music*
2607 — **Source:** *Stored music*
**Feedback:** ✚ — 2608

## FIG. 26

2701 — 2702

| SMARTPLAY | 4:04 / 5:34 |
| LES+A HARD DAYS NIGH |

— 2704

## FIG. 27

EP 1 548 740 A2

## Settings: Main

2801

2802 — Playing: *Station 4* ▼

2803 — Sleep: *Off*

2804 — Audio settings: (Enter)

System status: (Enter)

2805

## Settings: Status

2806

2807 — Playing: *Station 4*

2808 — Trained: *20%*

2809 — Tracks: *34 thumbs up, 56 thumbs down*

Top Artists: *Sting*

2810

*Queen*

2811

*U2*

Reset Station: (Enter)

## FIG. 28

**FIG. 29**

**FIG. 30**

3101 — EXPLICIT LIKE

3102

3103 — IMPLICIT & ALGORITHMIC

3104

3105 — EXPLICIT DISLIKE

MUSIC PREFERENCE WEIGHT

INITIAL STATE — 3106

TARGET STATE — 3107

FIG. 31

FIG. 32

EP 1 548 740 A2

FIG. 33

69

All prior art

All patents

Design/Utility

Classification

Prior art cited

Inventor/Author

Title

Assignees

Dates

# FIG. 34

FIG. 35A

FIG. 35

EP 1 548 740 A2

FIG. 35B

EP 1 548 740 A2

FIG. 36

FIG. 37

3870

STORED

PENNY LANE — 3871
3872 — THE BEATLES

3873

3874 4 EMMA'S

■ PAUSED

3876

3875 ◄ BACK (t) LIBRARY ►

## FIG. 38A

180

MUSIC LIBRARY - SEARCH

3880 GENRE: ROCK/POP ►
3884 ARTIST: -THE BEATLES- ►
3886
3888 ALBUM; -ALL ALBUMS- ►
3890 TRACK: -ALL TRACKS- ►
ACTION: PLAY SELECTION ►
3892 16 ALBUMS / 221 TRACKS

◄ BACK [PLAY] 196

3894

## FIG. 38B

3900

3906 STORED 3902

GENRE -ALL ARTISTS-
ARTIS◄ ABBA
ALBUM BEATLES, THE
TRACK BEE GEES, THE
ACTION BIG AUDIO DYNAM...
CURE, THE
16 AL ▼

◄CANCEL [OK]

## FIG. 38C